# EUROPEAN PATENT APPLICATION

(11) **EP 1 659 732 A2**
(43) Date of publication of application: **24.05.2006**
(21) Application number: 05255028.2
(22) Date of filing: 15.08.2005
(51) Int. Cl.: H04L 12/12

(54) **Information terminal remote operation method and system**

(30) Priority: 22.11.2004 JP 2004337374
(71) Applicant: KABUSHIKI KAISHA TOSHIBA, Tokyo 105-8001 (JP)
(72) Inventor: Shimizu, Nobuo, Intellectual Propert Division, Tokyo (JP); Kawano, Tomohide, Intellectual Propert Division, Tokyo (JP)
(74) Representative: Granleese, Rhian Jane

(57) **Abstract**

An information-terminal remote-operation system includes at least one remote access terminal (3) connected to a public network (11), a local network (10) connected to the public network (11), at least one information terminal apparatus (4) that is connected to the local network (10) and that is remotely operated by the remote access terminal (3), an information-terminal control apparatus (5) connected to the local network (10), and a gateway server (2) that controls bidirectional communication between the remote access terminal (3) and the information terminal apparatus (4) and bidirectional communication between the remote access terminal (3) and the information-terminal control apparatus (5). When the information terminal apparatus (4) is not booted the information-terminal control apparatus (5) boots the information terminal apparatus (4).

## Description

### BACKGROUND OF THE INVENTION

### 1. Field of the Invention

The present invention relates to information-terminal remote-operation systems, remote access terminals therefor, gateway servers therefor, information-terminal control apparatuses therefor, information terminal apparatuses therefore, and a remote operation method therefor. In particular, the present invention relates to an information-terminal remote-operation system in which an information terminal apparatuses on a network protected by a firewall are remotely operated through a public network, a remote access terminal therefor, a gateway server therefor, an information-terminal control apparatus therefor, an information terminal apparatus therefor, and a remote operation method therefor.

### 2. Description of the Related Art

In recent years, network-connectable information apparatuses, such as internet-connectable mobile telephones and PDAs having a wireless LAN connection function have become widespread. These information apparatuses have high information processing capabilities in conjunction with enhanced performance of built-in CPUs and increased capacities of storage devices. Additionally, display units included in the information apparatuses also have high resolutions, thus making it possible to display fine images.

On the other hand, development for a higher transfer rate and larger capacity of networks, such as the Internet and mobile telephone networks, are also proceeding rapidly.

With the progress of the information-apparatus and network technology, for example, the development of technologies for allowing an information apparatus at a remote place, such as at a place outside a company, to connect to a personal computer (hereinafter referred to an "information terminal apparatus" or "PC") in the company through a network, such as the Internet or a mobile telephone network is underway to achieve remote control of the information terminal apparatus.

Typically, for information terminal apparatus provided in a company, for example, the security is insured by providing a firewall at the entrance of an intra-company network to thereby prevent unauthorized accessing from the outside.

Needless to say, high security is also required in the information-terminal-apparatus remote-operation technology.

As a first technology for achieving a PC remote operation, for example, a technology called VPN is available. The VPN is a technology in which, regardless of passing through the Internet, a network provides an interconnection as if it were a dedicated line and allows secure communication. The VPN is also called a "virtual closed network" or a "virtual private network".

The VPN has mainly two functions. One is a function for converting packet headers for communication. This function is accomplished by a dedicated VPN apparatus and also allows communication, using a private address and a protocol other than TCP/IP, through the Internet, which inherently permits the transmission of only IP packets. This function is also referred to as "tunneling", in a sense that another communication is transmitted through an internet communication. The other function is to encrypt communication packets. This function can prevent the interception of "tunneled" packets and can hide communication destinations and communication channels.

As a second technology for achieving a PC remote operation, a system in which a dedicated gateway server is additionally provided outside an intra-company network has been devised.

In the second technology, in order to achieve a specific remote access from the outside of a company to a PC or server in an intra-company intranet, a gateway server is installed outside a firewall. A connection to the gateway server from the outside the company and a connection from the PC or server placed in an intra-company intranet are individually established and traffics between the connections are associated by the gateway server, thereby allowing the PC or server placed in the intra-company intranet to be remotely controlled from the outside of the company. Typically, the connection from the PC or server, placed in the intra-company intranet, to the gateway is achieved via an existing intra-company proxy server placed in the intra-company intranet.

The use of the system allows a PC or server placed in an intranet in a company to be accessed from the outside of the company, without constructing a dedicated infrastructure in the company and without changing the in-house security policy.

As a third technology for achieving a PC remote operation, Japanese Unexamined Patent Publication (Kokai) No. 2003-244183 discloses a technology for achieving remote control by sending a remote operation instruction, issued from a mobile terminal, to a network apparatus via a remote-control relay server.

In the technology disclosed in Japanese Unexamined Patent Publication (Kokai) No. 2003-244183, a network apparatus to be remotely controlled issues an access request and an access-key generation request to a remote-control relay server, so that an access key is issued. A mobile terminal uses the access key to remotely control the network apparatus of interest via the remote-control relay server. In addition, the network apparatus to be remotely controlled generates an access key and registers the generated access key with the remote-control relay server, so that the network apparatus of interest is remotely controlled via the remote-control relay server. This technology also allows the result of remote control processing to be transferred to the mobile terminal via the remote-control relay server.

The VPN, which is the first technology for achieving a PC remote operation, is a technology in which, regardless of passing through the Internet, a network provides an interconnection as if it were a dedicated line and allows secure communication.

However, the VPN requires a dedicated VPN apparatus, as described above, and further converts the headers of packets into headers for VPN communication. Typically, the entrance of an intra-company network is provided with a firewall set in accordance with the security policy of the company. Thus, in order to transmit VPN-based communication data to the intra-company network, the settings of the firewall need to be changed. This also involves a change in the security policy of the company.

Moreover, there is a possibility that the security level decreases in connection with a change in the settings of the firewall and a change in the security policy.

With second technology for achieving a PC remote operation, although the dedicated gateway server needs to be provided outside the intra-company network, data packets are transmitted through the network based on a system that is the same as the conventional system in which packets are transmitted through the Internet. Accordingly, there is no need to change the setting of the firewall, thus making it possible to maintain the security policy of the company.

The system based on the second technology, however, has a problem in that a PC or server placed in an intra-company intranet needs to pre-establish a secure connection for bidirectional communication with a gateway server in order to allow remote-accessing from the outside of the company. This is because, while a PC or server placed in an intra-company intranet can connect to a gateway server provided on a public network, connection in a direction opposite thereto is not typically permitted due to the security policy.

Thus, after the PC in the company is booted and a secure connection is established between the intra-company PC and an information apparatus outside the company, this system allows bidirectional secure communication. However, when the intra-company PC is not booted, the connection cannot be established and thus the PC cannot be remotely operated. Naturally, the information apparatus outside the company cannot use, for example, a Wake-on-Lan (WOL) functionality included in the intra-company network to automatically boot the PC.

The third technology, which is disclosed in Japanese Unexamined Patent Publication (Kokai) No. 2003-244183, is based on a precondition that bidirectional communication through the Internet is possible between a mobile terminal and a network apparatus to be remotely operated. The technology disclosed in Japanese Unexamined Patent Publication (Kokai) No. 2003-244183, is aimed to remotely operate, mainly, home-use information apparatuses externally from mobile terminals and so on, and thus does not necessarily support the remote operation of PCs in an environment protected by a firewall, such as PCs in a company.

### SUMMARY OF THE INVENTION

In view of the foregoing situations, the present invention provides an information-terminal remote-operation system that can remotely operate a PC in a local network without making a change to the security policy of an existing local network and that can ensure a high security level, a remote access terminal therefor, a gateway server therefor, an information-terminal control apparatus therefor, an information terminal apparatus therefor, and a remote operation method therefor.

One aspect of the present invention provides an information-terminal remote-operation system. The information-terminal remote-operation system includes at least one remote access terminal connected to a public network, a local network connected to the public network via a firewall, and at least one information terminal apparatus that is connected to the local network and that is remotely operated by the remote access terminal. The information-terminal remote-operation system further includes an information-terminal control apparatus that is connected to the local network to control the information terminal apparatus, and a gateway server provided in the public network to control bidirectional communication between the remote access terminal and the information terminal apparatus and bidirectional communication between the remote access terminal and the information-terminal control apparatus. When the remote access terminal attempts to remotely operate the information terminal apparatus and the information terminal apparatus is not booted, the information-terminal control apparatus boots the information terminal apparatus.

Another aspect of the present invention provides a gateway server that is provided in a public network to control bidirectional communication between at least one remote access terminal and at least one information terminal apparatus and bidirectional communication between the remote access terminal and an information-terminal control apparatus. The remote access terminal is connected to the public network and the information terminal apparatus and the information-terminal control apparatus are provided in a local network connected to the public network via a firewall. The gateway server includes a ciphering unit configured to encrypt and to decrypt the bidirectional communication, a first connecting unit configured to perform communication with the information-terminal control apparatus, a second connecting unit configured to perform communication with the remote access terminal, and a third connecting unit configured to perform communication with the information terminal apparatus. The remote access terminal further includes an authenticating unit configured to authenticate connections with the remote access terminal, the information terminal apparatus, and the information-terminal control apparatus; a management-information storing unit configured to pre-store authentication information required for the authentication and storing states of the connections in relation to the authentication information; an electronic-mail sending unit configured to send electronic mail to the remote access terminal; and a relaying unit configured to relay the bidirectional communication between the remote access terminal and the information terminal apparatus. When the remote access terminal attempts to remotely operate the information terminal apparatus and the information terminal apparatus is not booted, the first connecting unit issues an instruction to the information-terminal control apparatus so as to boot the information terminal apparatus.

Still another aspect of the present invention provides a remote access terminal that is provided in a public network and that performs bidirectional communication with at least one information terminal apparatuses and an information-terminal control apparatus, provided in a local network connected to the public network via a firewall, via a gateway server. The remote access terminal includes a ciphering unit configured to encrypt and to decrypt the bidirectional communication, a connecting unit configured to perform communication with the gateway server, an authentication-information sending unit configured to send authentication information to the gateway server, a remote operating unit configured to remotely operate the information terminal apparatuses, and an electronic-mail receiving unit configured to receive electronic mail from the gateway server. The information terminal apparatuses to be remotely operated include an information terminal apparatus to be booted by the information-terminal control apparatus.

A further aspect of the present invention provides an information terminal apparatus in a local network connected to a public network via a firewall. The information terminal apparatus includes a connecting unit configured to perform bidirectional communication with a gateway server connected to the public network, a ciphering unit configured to encrypt and to decrypt the bidirectional communication, an authentication-information sending unit configured to send authentication information to the gateway server, and a remote operating unit configured to perform bidirectional communication with s remote access terminal connected to the gateway server through the public network and for being remotely operated by the remote access terminal. The information terminal apparatus further includes a unit configured, upon receiving a request for communication with the remote access terminal from the gateway server, to determine whether or not to approve the communication request, and to return a result of the determination to the gateway server; a local connecting unit configured to receive a booting instruction sent from an information-terminal control apparatus to the information terminal apparatus when the remote access terminal attempts to remotely operate the information terminal apparatus and the information terminal apparatus is not booted; and a booting unit configured to boot the information terminal apparatus after receiving the booting instruction. The connecting unit establishes a connection with the gateway server after the information terminal apparatus is booted.

A still further aspect of the present invention provides an information-terminal control apparatus in a local network connected to a public network via a firewall. The information-terminal control apparatus includes a local connecting unit capable of communicating with a plurality of information terminal apparatuses connected to the local network, a connecting unit configured to establish secure bidirectional connection with the gateway server connected to the public network, a ciphering unit configured to encrypt and to decrypt the bidirectional communication, and an authentication-information sending unit configured to send authentication information to the gateway server. The information-terminal control apparatus further includes a unit configured to receive, from the gateway server via the established bidirectional communication, an identifier for identifying one of the information terminal apparatuses and a remote connection request sent from a remote access terminal connected to the public network; an instruction generating unit configured to generate a booting instruction for booting the information terminal apparatus in accordance with the received remote connection request; and an unit configured to send the generated booting instruction to the information terminal apparatus corresponding to the identifier via the local connection unit.

Yet another aspect of the present invention provides a remote operation method for an information-terminal remote-operation system including at least one remote access terminal connected to a public network, a local network connected to the public network via a firewall, at least one information terminal apparatus connected to the local network, an information-terminal control apparatus that is connected to the local network and that controls the information terminal apparatus, and a gateway server that controls encrypted bidirectional communication between the remote access terminal and the information terminal apparatus and encrypted bidirectional communication between the remote access terminal and the information-terminal control apparatus. The method includes a step of establishing a first connection between the information-terminal control apparatus and the gateway server; a step of sending information, required for first authentication, from the information-terminal control apparatus to the gateway server; and a step of maintaining the first connection when the gateway server succeeds in the first authentication and disconnecting the first connection when the gateway server fails in the first authentication. The method further includes a step of establishing a second connection between the remote access terminal and the gateway server; a step of sending information, required for second authentication, from the remote access terminal to the gateway server; a step of maintaining the second connection when the gateway server succeeds in the second authentication and disconnecting the second connection when the gateway server fails in the second authentication; a step of sending a request, from the remote access terminal to the gateway server, for communication with a specific one of the at least one information terminal apparatus connected to the local network; and a step of issuing an instruction from the gateway server to the information-terminal control apparatus so as to boot the specific information terminal apparatus, when the specific information terminal apparatus is not booted. Upon receiving the instruction, the information-terminal control apparatus boots the specific information terminal apparatus and establishes a third connection between the specific information terminal apparatus and the gateway server. The specific information terminal apparatus sends information required for third authentication to the gateway server. When the gateway server succeeds in the third authentication, the third connection is maintained, and when the gateway server fails in the third authentication, the third connection is disconnected. The gateway server issues the communication request, received from the remote access terminal, to the information terminal apparatus via the third connection. The information terminal apparatus determines whether or not to approve the communication request, issues a notification indicating a result of the determination to the gateway server, and maintains the third connection regardless of the determination result. When the second connection is maintained, the gateway server uses the second connection to issue a notification indicating a state of the third connection and a notification indicating the determination result to the remote access terminal, and when the second connection is disconnected, the gateway server uses electronic mail to issue the notifications to the remote access terminal. The remote access terminal remotely operates the information terminal apparatus through bidirectional communication with the information terminal apparatus, the bidirectional communication using the second connection and the third connection.

The information-terminal remote-operation system, the remote access terminal therefor, the gateway server therefor, an information-terminal control apparatus therefor, the information terminal apparatus therefor, and the remote operation method therefor according to the present invention can remotely operate an information terminal apparatus in a local network without making a change to the security policy of an existing local network and can ensure a high security level.

### BRIEF DESCRIPTION OF THE DRAWINGS

FIG. 1 is a diagram showing the system configuration of an information-terminal remote-operation system according to a first embodiment of the present invention;
FIG. 2 is a diagram showing an example of the hardware configuration of a gateway server, an information terminal apparatus, and an information-terminal control apparatus according to the present invention;
FIG. 3 is a diagram showing an example of the software configuration of the gateway server according to the present invention;
FIG. 4 is a diagram showing an example of the software configuration of a remote access terminal according to the present invention;
FIG. 5 is a diagram showing an example of the software configuration of the information terminal apparatus according to the present invention;
FIG. 6 is a diagram showing an example of the software configuration of the information-terminal control apparatus according to the present invention;
FIG. 7 is a flow chart showing the processing flow of the information-terminal remote-operation system according to the first embodiment of the present invention;
FIG. 8 is a sequence diagram showing the communication flow of the information-terminal remote-operation system according to the first embodiment of the present invention;
FIG. 9A is a flow chart of processing for querying for a connectable information terminal apparatus and FIG. 9B shows a remote access management table to which reference is made during the query;
FIG. 10 is a flow chart showing the flow of suspension processing in the information-terminal remote-operation system according to the first embodiment of the present invention;
FIG. 11 is a sequence diagram showing the flow of suspension processing in the information-terminal remote-operation system according to the first embodiment of the present invention;
FIG. 12 is a sequence diagram showing the flow of the shutdown processing in the information-terminal remote-operation system according to the first embodiment of the present invention;
FIG. 13 is a sequence diagram showing the flow of the shutdown processing in the information-terminal remote-operation system according to the first embodiment of the present invention;
FIG. 14A is a flow chart showing the flow of authentication processing for the information-terminal control apparatus in the information-terminal remote-operation system according to the first embodiment of the present invention and FIG. 14B shows a PCCS-information management table to which reference is made in the authentication processing for the information-terminal control apparatus;
FIG. 15A is a flow chart showing the flow of authentication processing of the information terminal apparatus in the information-terminal remote-operation system according to the first embodiment of the present invention and FIG. 15B shows a PC information management table to which reference is made in the authentication processing for the information terminal apparatus;
FIG. 16 is a flow chart showing the flow of authentication processing for the remote access terminal in the information-terminal remote-operation system according to the first embodiment of the present invention;
FIG. 17A shows a remote-access-terminal-apparatus information management table (an R information management table) required for the authentication processing of the remote access terminal, FIG. 17B shows a login authentication-target management table, and FIG. 17C shows a login-information management table;
FIG. 18 is a flow chart showing the flow of login authentication processing for the remote access terminal in the information-terminal remote-operation system according to the first embodiment of the present invention;
FIG. 19 is a first sequence diagram showing the flow of communication for login authentication processing for the remote access terminal in the information-terminal remote-operation system according to the first embodiment of the present invention;
FIG. 20 is a second sequence diagram showing the flow of communication for the login authentication processing for the remote access terminal in the information-terminal remote-operation system according to the first embodiment of the present invention;
FIG. 21 is a diagram showing the system configuration of an information-terminal remote-operation system according to a second embodiment of the present invention; and
FIG. 22 is a sequence diagram showing the flow of communication in the information-terminal remote-operation system according to the second embodiment of the present invention.

### DESCRIPTION OF THE PREFERRED EMBODIMENTS

An information-terminal remote-operation system, a remote access terminal therefor, a gateway server therefor, an information-terminal control apparatus therefor, an information terminal apparatus therefor, and a remote operation method therefor according to embodiments of the present invention will be described below with reference to the accompanying drawings.

### 1) System Configuration

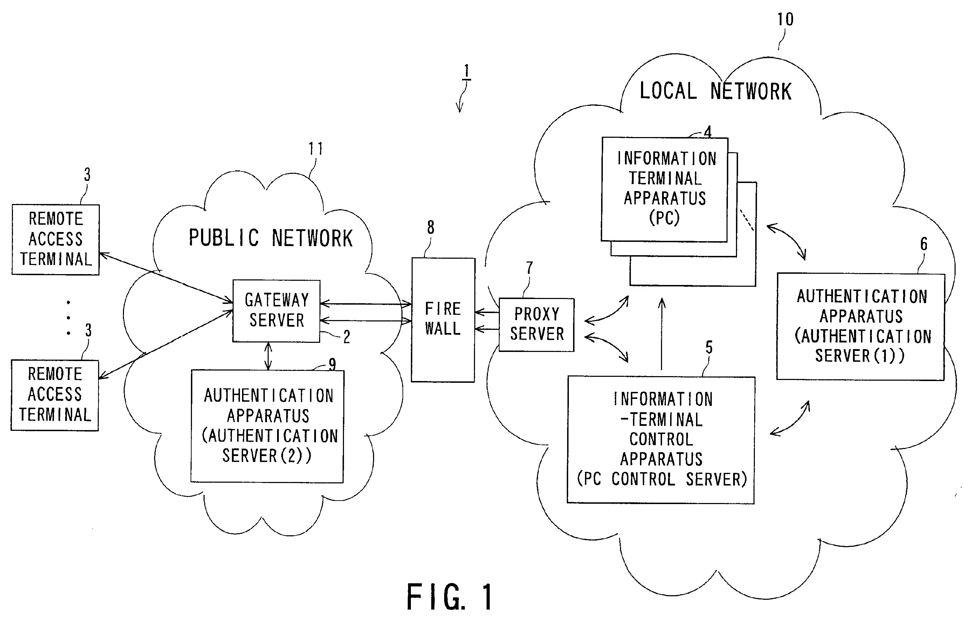

FIG. 1 is a diagram showing the system configuration of an information-terminal remote-operation system 1 according to a first embodiment of the present invention.

The information-terminal remote-operation system 1 includes a gateway server 2 provided in a public network 11 typified by the Internet, remote access terminals 3 connected to the public network 11, a local network 10 connected to the public network 11 via a firewall 8, information terminal apparatuses 4 connected to the local network 10, and an information-terminal control apparatus 5 connected to the local network 10.

The information terminal apparatuses 4 and the information-terminal control apparatus 5 are connected to the public network 11 via a proxy server 7, provided in the local network 10, to perform secure bidirectional communication with the public network 11 outside the firewall 8.

In addition, in the information-terminal remote-operation system 1, an authentication apparatus 6 or 9 for authenticating the remote access terminals 3 may be provided in the local network 10 or the public network 11.

Each information terminal apparatus 4 corresponds to, for example, an information processing apparatus typified by a personal computer (PC) and may be simply referred to as a "PC 4" hereinafter.

The information-terminal control apparatus 5 serves as a server for offering a predetermined service to the information terminal apparatuses 4 that is connected to the local network 10. The information-terminal control apparatus 5 may be simply referred to as a "PC control server 5" hereinafter.

The local network 10 is a local network typified by an intra-company intranet. Unlike the public network 11, such as the Internet, that is accessible from the general public, the local network 10 is essentially intended to allow specific users to access each other in the local network 10. Thus, high security is required to prevent company secrets, personal information, and so on from leaking from a large number of information apparatuses, connected to the local network 10, to the public network 11.

On the other hand, users in the local network 10 need to access an external web server and/or transmit/receive electronic mail through the public network 11, and thus, connection between the local network 10 and the public network 11 must be maintained.

The firewall 8, therefore, is provided at the node of the local network 10 and the public network 11 to block unauthorized access from the outside.

When the information terminal apparatus 4 or the like in the local network 10 accesses a web server or the like in the public network 11, the information terminal apparatus 4 performs communication via the proxy server 7 to thereby prevent unauthorized access to the information terminal apparatus 4.

The proxy server 7 is implemented with, but is not limited to, an HTTP proxy server for bidirectional communication based on HTTP mainly used for viewing the WWW, a SOCKS proxy server for bidirectional communication based on a protocol using TCP/IP, or the like.

The types of remote access terminals 3 are not particularly limited. For example, the remote access terminals 3 are compact and portable information terminal apparatuses, such as mobile telephones and PDAs, and are connectable to the public network 11, such as the Internet, through a public telephone line and/or a LAN line.

For example, when the remote access terminal 3 is a mobile telephone, the user can carry out a required task by accessing his or her corporate personal computer (i.e., the information terminal apparatus 4) via the mobile telephone while on the road or business trip.

Alternatively, the remote access terminal 3 may be a personal computer that is connected to a local area network other than the local network 10. For example, when the local network 10 is a corporate intranet at a headquarters, the remote access terminal 3 may be a personal computer connected to a local network provided at a branch office.

The gateway server 2 controls connection and communication with apparatuses 3 outside the local network 10, such as the remote access terminals, and connection and communication with apparatuses in the local network 10, such as the information terminal apparatuses 4 and the information-terminal control apparatus 5, and also performs required authentication processing to establish connection with those apparatuses.

While the gateway server 2 is provided in the public network 11, substantial management, such as authentication processing and connection-channel control for an apparatus to be connected, are under the authorization of an administrator of the local network 10. The gateway server 2 is operated in a stringent security environment, for example, in an environment within a data center provided by an ISP. At the interface with the gateway server 2, the gateway server 2 has also a firewall functionality to prevent unauthorized access from the public network.

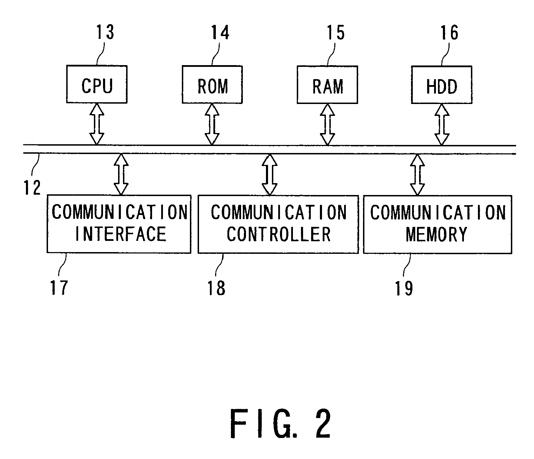

FIG. 2 shows an example of the hardware configurations of the gateway server 2, the information terminal apparatus (PC) 4, and the information-terminal control apparatus (PC control server) 5. The basic configurations of the apparatuses are the same.

Each apparatus includes a CPU 13, a ROM 14, a RAM 15, a HDD 16, a communication interface 17, a communication controller 18, and a communication memory 19.

When each apparatus is powered on, a system program (OS) in the ROM 14 boots the system and then a software program stored in the ROM 14 or the HDD 16 is loaded into the RAM 15 and is executed. A communication I/F 17 is used for all inputs and outputs for communication with the network. The communication controller 18 controls input/output of communication traffic passing through the apparatus and the communication memory 19 temporarily stores communication data.

### 2) Internal Configuration of Element

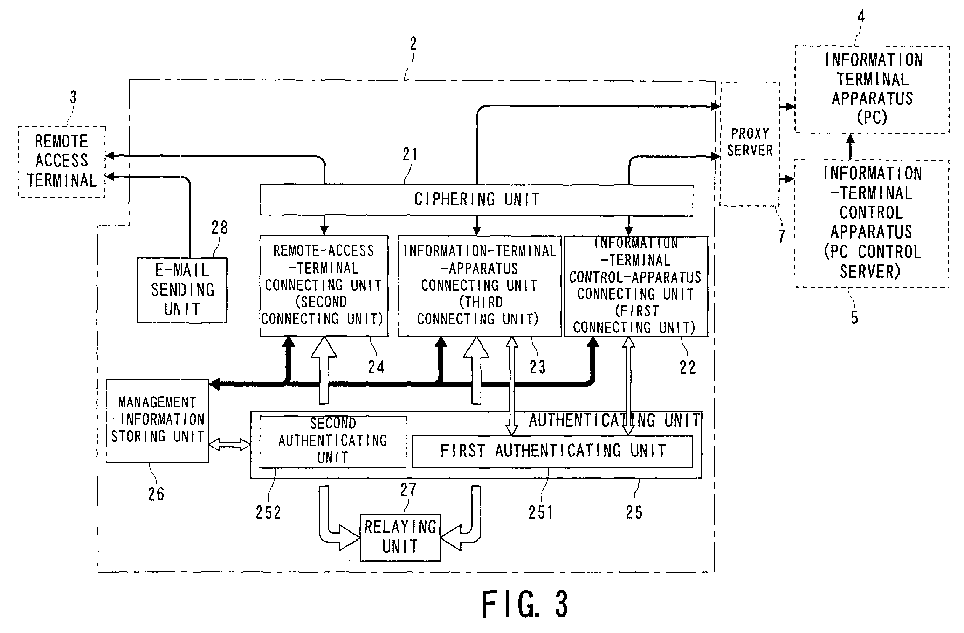

FIG. 3 is a diagram showing the configuration (software configuration) of the gateway server 2 of the elements constituting the information-terminal remote-operation system 1.

The gateway server 2 includes a ciphering unit 21 configured to encrypt and to decrypt input/output data of the gateway server 2.

While the cipher system is not particularly limited, the encryption/decryption can be accomplished using, for example, a protocol called an SSL/TLS protocol.

The gateway server 2 further includes an information-terminal control-apparatus connecting unit (a first connecting unit) 22 configured to control connection/communication with the information-terminal control apparatus 5 in the local network 10, an information-terminal-apparatus connecting unit (a third connecting unit) 23 configured to control connection/communication with the information terminal apparatus 4, and a remote-access-terminal connecting unit (a second connecting unit) 24 configured to control connection/communication with the remote access terminal 3 connected to the public network 11.

For example, in accordance with a TCP/IP protocol, each connecting unit performs control for establishing and maintaining a connection for bidirectional communication and performs control for breaking the connection.

The gateway server 2 further includes an authenticating unit 25. The authenticating unit 25 can be separated into a first authenticating unit 251 and a second authenticating unit 252. The first authenticating unit 251 authenticates the information terminal apparatus 4 and the information-terminal control apparatus 5 and the second authenticating unit 252 authenticates the remote access terminal 3.

The gateway server 2 further includes a management-information storing unit 26 configured to store authentication information and a table for managing a connection status. The table for managing a connection status has a "connection status" field. For example, when the connection between the gateway server 2 and the information-terminal control apparatus 5 is established, the "connection status" is changed from "disconnected" to "connected".

Information, such as apparatus identification names and passwords, that is required for authentication during connection of respective connection apparatuses is pre-registered as the authentication information in the management-information storing unit 26.

The gateway server 2 further includes a relaying unit 27. After a bidirectional connection is established between the remote access terminal 3 and the information terminal apparatus 4, the relaying unit 27 relays communication therebetween.

In addition, the gateway server 2 includes an electronic-mail sending unit 28. The electronic-mail sending unit 28 sends electronic mail to the remote access terminal 3, when required.

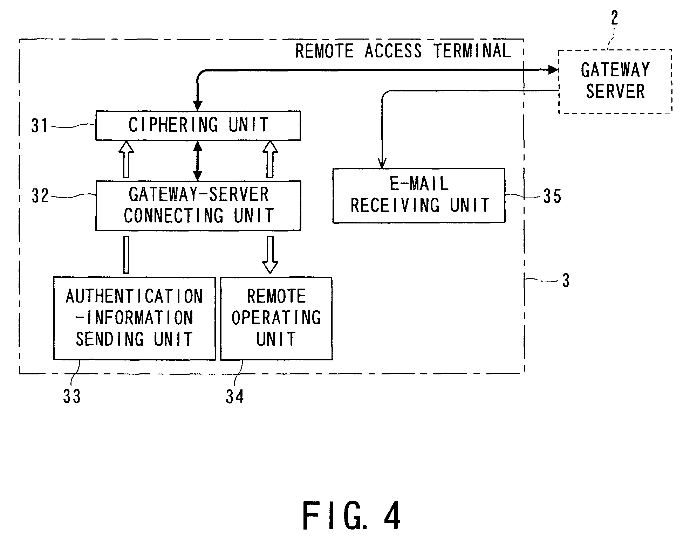

FIG. 4 is a diagram showing the software configuration of the remote access terminal 3 included in the information-terminal remote-operation system 1.

Each remote access terminal 3 includes a ciphering unit 31 configured to encrypt and to decrypt input/output data of the remote access terminal 3 and a gateway-server connecting unit 32 configured to controlling connection/communication with the gateway server 2.

The remote access terminal 3 further includes an authentication-information sending unit 33 configured to obtain authentication from the gateway server 2 during connection with the gateway server 2. The authentication information included in the remote access terminal 3 contains terminal-apparatus information for identifying each remote access terminal 3 and login information for identifying the user of the remote access terminal 3.

In addition, the remote access terminal 3 includes a remote operating unit 34 configured to perform various remote operations on the information terminal apparatus 4 after a bidirectional connection between the remote access terminal 3 and each information terminal apparatus 4 is established.

The remote access terminal 3 further includes an electronic-mail receiving unit 35 configured to receive electronic mail from the gateway server 2 when required.

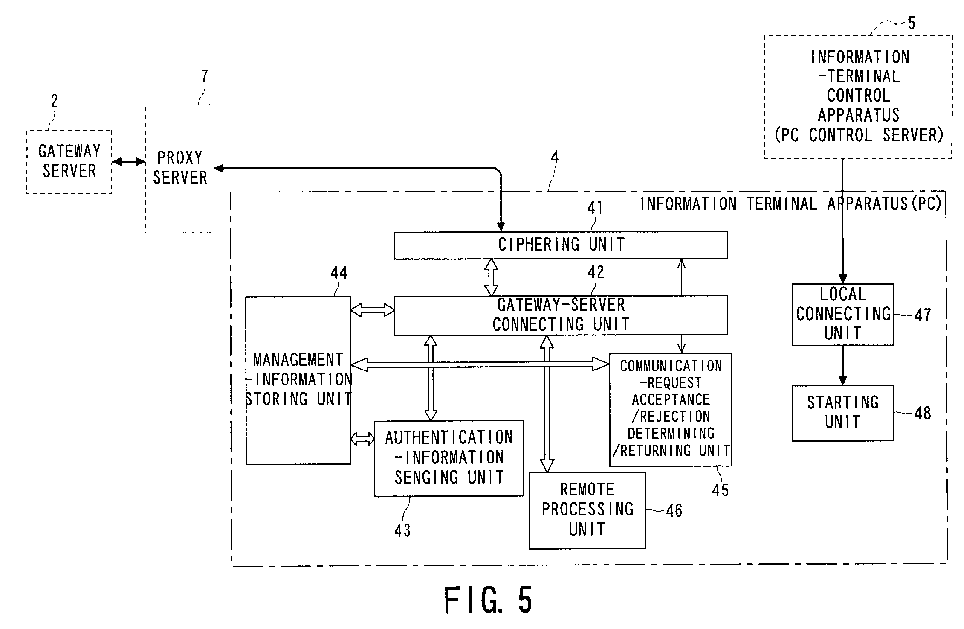

FIG. 5 is a diagram showing the software configuration of each information terminal apparatus 4 included in the information-terminal remote-operation system 1.

The information terminal apparatus 4 includes a ciphering unit 41 configured to encrypt and to decrypt input/output data of the information terminal apparatus 4 and a gateway-server connecting unit 42 configured to control connection/communication with the gateway server 2.

During the connection with the gateway server 2, the information terminal apparatus 4 further includes an authentication-information sending unit 43 configured to obtain authentication from the gateway server 2. The authentication information included in the information terminal apparatus 4 contains apparatus information for identifying the information terminal apparatus 4 and a management-domain access key corresponding to a password.

The information terminal apparatus 4 further includes a management-information storing unit 44 configured to store authentication information and a table for managing a connection status. The table for managing a connection status has a "connection status" field. For example, when the connection between the gateway server 2 and the information terminal apparatus 4 is established, the "connection status" is changed from "disconnected" to "connected".

Information, such as the apparatus information of the information terminal apparatus 4 and a management domain access key, that is required for authentication during connection of each connection apparatus is pre-registered as the authentication information in the management-information storing unit 44.

The information terminal apparatus 4 further includes a communication-request acceptance/rejection determining/returning unit 45. Upon receiving a communication request from the remote access terminal 3 via the gateway server 2, the communication-request acceptance/rejection determining/returning unit 45 determines whether or not to approve communication with the remote access terminal 3 and returns the determination result to the gateway server 2.

The information terminal apparatus 4 further includes a remote processing unit 46. After a bidirectional connection is established between the remote access terminal 3 and the information terminal apparatus 4, the remote processing unit 46 is remotely operated by the remote operating unit 34 of the remote access terminal 3 and serves as a relay for various types of application software (not shown) included in the information terminal apparatus 4.

A local connecting unit 47 provides a connection between the information terminal apparatus 4 and the information-terminal control apparatus 5 through the local network 10.

The local connecting unit 47 receives various control messages from the information-terminal control apparatus 5 through the local network 10. The control messages include, for example, a booting instruction based on Magic Packet™.

When the information terminal apparatus 4 is not booted, the local connecting unit 47 receives the Magic Packet™ based booting instruction from the information-terminal control apparatus 5 through the local network 10.

In response to the booting instruction, a booting unit 48 in the information terminal apparatus 4 performs a booting sequence for the information terminal apparatus 4.

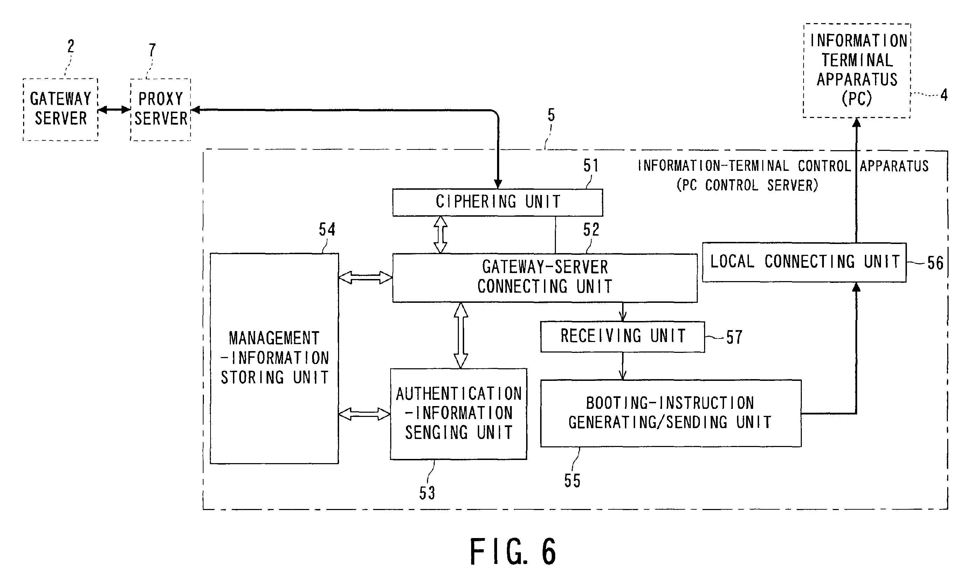

FIG. 6 is a diagram showing the software configuration of the information-terminal control apparatus 5 included in the information-terminal remote-operation system 1.

The information-terminal control apparatus 5 includes a ciphering unit 51 configured to encrypt and to decrypt input/output data of the information-terminal control apparatus 5, a gateway-server connecting unit 52 configured to establish bidirectional connection with the gateway server 2, and a receiving unit 57 configured to receive information, such as an identifier, for identifying the information terminal apparatus 4 to be requested for a remote operation or to be remotely operated by the gateway server 2.

The information-terminal control apparatus 5 further includes an authentication-information sending unit 53 configured to obtain authentication from the gateway server 2 during connection with the gateway server 2. The authentication information included the information-terminal control apparatus 5 contains apparatus information for identifying the information-terminal control apparatus 5 and a management domain access keys corresponding to passwords.

The information-terminal control apparatus 5 further includes a management-information storing unit 54 configured to store authentication information and a table for managing connection statuses.

In addition, the information-terminal control apparatus 5 includes a booting-instruction generating/sending unit 55. For example, in response to a control message based on Magic Packet™, the booting-instruction generating/sending unit 55 generates a booting instruction and sends the booting instruction to an information terminal apparatus 4 that is not booted. The information-terminal control apparatus 5 uses a local connecting unit 56 included therein to perform transmission to the information terminal apparatus 4 via the local network 10.

### 3) Connection Operation of Information Terminal Remote Operation System

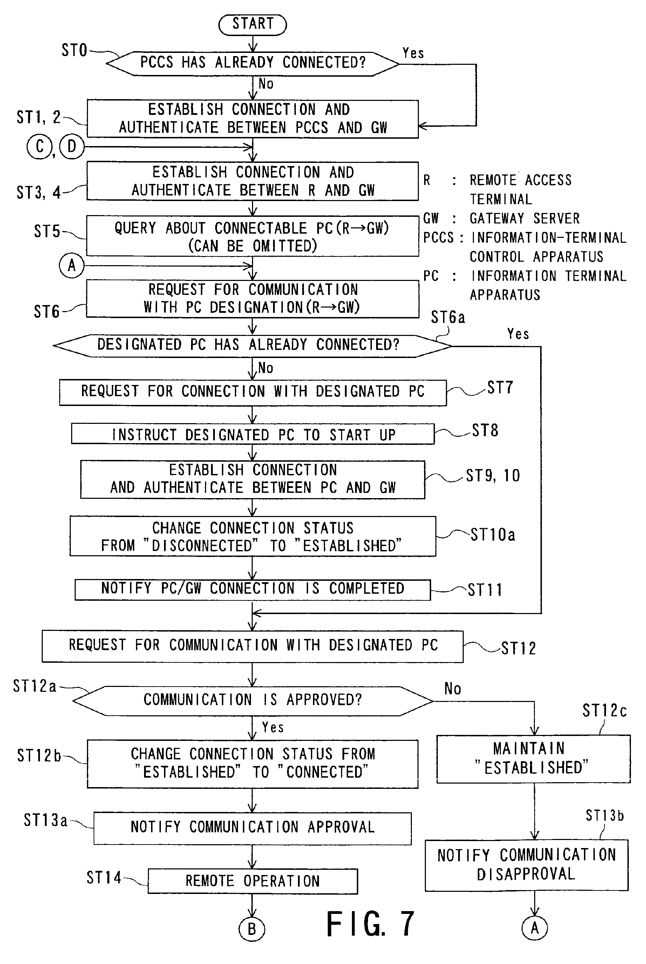

The connection operation of the information-terminal remote-operation system 1 configured as described above will now be described with reference to FIGS. 7 to 13.

For simplicity of illustration, the gateway server 2 is abbreviated as "GW", the remote access terminal 3 is abbreviated as "R", the information terminal apparatus 4 is abbreviated as "PC", and the information-terminal control apparatus 5 is abbreviated as "PCCS" in the figures illustrated below.

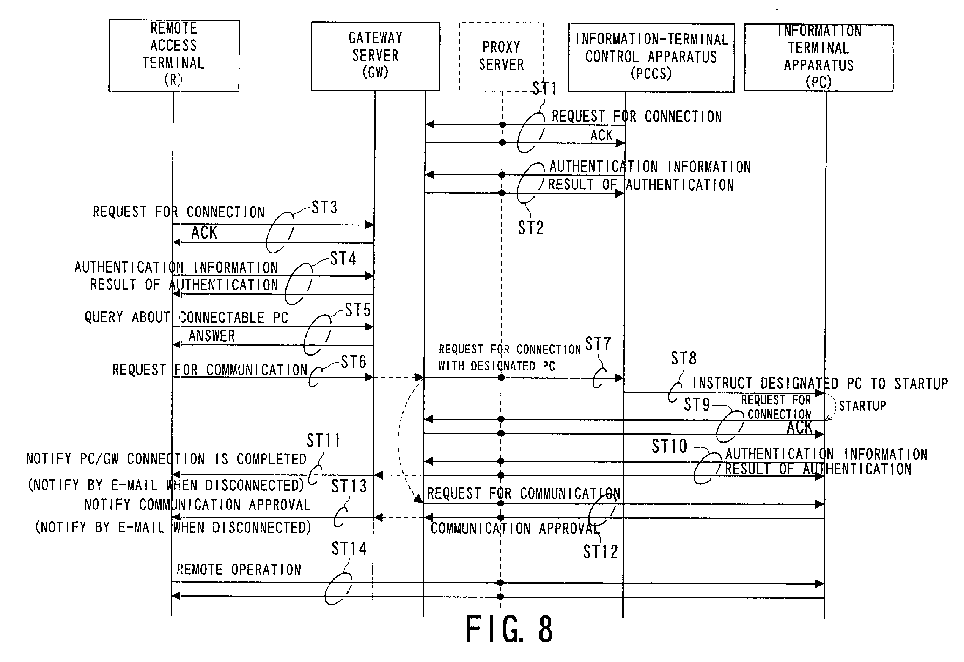

FIG. 7 is a flow chat showing the flow of processing until a remote operation is started performed in the information-terminal remote-operation system 1. FIG. 8 is a sequence diagram illustrating the flow of data between individual apparatuses. In FIGS. 7 and 8, the same process is denoted with the same step numeral character and redundant descriptions are not given.

First, in step ST1, the gateway server 2 and the information-terminal control apparatus 5 establishes a connection therebetween for bidirectional communication. The information-terminal control apparatus 5 issues a connection request to the gateway server 2. When the gateway server 2 acknowledges the connection request, the connection is established. Individual apparatuses in the information-terminal remote-operation system 1 perform communication with each other using a bidirectional communication channel based on a connection-oriented protocol, such as TCP, in order to ensure the transmission/reception of information.

Further, in order to ensure information security, encryption and decryption based on an SSL/TLS protocol or the like are performed.

Next, in step ST2, the information-terminal control apparatus 5 and the gateway server 2 perform authentication processing therebetween. In the information-terminal remote-operation system 1, since communication is performed through the public network 11, the authentication processing is very important as well as the encryption processing. The authentication processing for each apparatus will be described below.

When the authentication succeeds in step ST2, the process proceeds to step ST3.

In many cases, the gateway server 2 and the information-terminal control apparatus 5 are typically operated all the time (i.e., for 24 hours). In this case, when an attempt is made to connect the remote access terminal 3 or the information terminal apparatus 4, the connection between the information-terminal control apparatus 5 and the gateway server 2 has already been established (Yes in step ST0), and thus, steps ST1 and ST2 are skipped.

In step ST3, similarly to step ST1, the remote access terminal 3 issues a connection request to the gateway server 2. When the gateway server 2 approves the connection request, the connection between the remote access terminal 3 and the gateway server 2 is established.

Further, in step ST4, authentication is performed on the remote access terminal 3. When the authentication succeeds, the process proceeds to step ST5.

In step ST5, the remote access terminal 3 queries the gateway server 2 for a connectable information terminal apparatus 4, i.e., an information terminal apparatus 4 to be remotely operated.

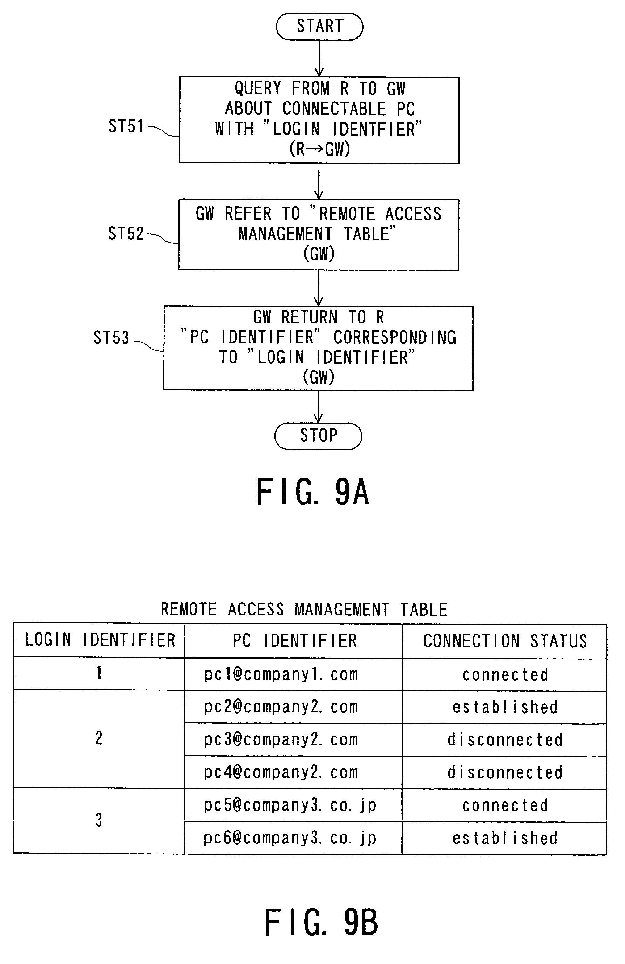

FIG. 9A shows details of the flow of step ST5. In step ST51, when the remote access terminal 3 queries the to gateway server2, the remote access terminal 3 sends a query, together with a "login identifier" pre-assigned to the user of the remote access terminal 3, to the gateway server 2.

The queried gateway server 2 refers to a remote access management table stored by the management-information storing unit 26 (in step ST52).

FIG. 9B shows one example of the remote-access management table. "Login identifiers" and "PC identifiers" are associated and are stored in the remote-access management table.

The example in FIG. 9B shows that a user who is assigned login identifier "2" can connect to three information terminal apparatus 4 (corresponding to PC identifiers "pc2@company2.com", "pc3@company2.com", and "pc4@company2.com").

In step ST53, the gateway server 2 returns a "PC identifier", corresponding to the "login identifier", to the remote access terminal 3.

For the user's convenience, the process in step ST5 is intended to notify the user of the remote access terminal 3 about the connectable information terminal apparatus 4 for the purpose of confirmation. Thus, step ST5 is not essential and can be omitted.

In step ST6, the remote access terminal 3 sends a communication request, designating an information terminal apparatus 4 with which the user of the remote access terminal 3 attempts to communicate, to the gateway server 2. The designation of an information terminal apparatus 4 is performed using a "PC identifier". For example, the remote access terminal 3 can issue a notification, indicating that the user thereof desires to communicate with an information terminal apparatus 4 identified with "pc2@company2.com", to the gateway server 2.

Next, in step ST6a, the gateway server 2 determines whether or not the designated information terminal apparatus 4 has already been connected. This determination is made by referring to the "connection status" field in the remote-access management table. When the "connection status" field indicates "disconnected", this means that the gateway server 2 and the information terminal apparatus 4 are not yet connected. On the other hand, when the "connection status" field indicates "established", this means the gateway server 2 and the information terminal apparatus 4 are already connected (however, a through connection between the remote access terminal 3 and the information terminal apparatus 4 is not established yet). When the gateway server 2 and the information terminal apparatus 4 are connected to each other, the process proceeds to step ST12.

On the other hand, when it is determined that the gateway server 2 and the information terminal apparatus 4 are not connected (No in step ST6a), the gateway server 2 issues a request for connection with the designated information terminal apparatus 4 to the information-terminal control apparatus 5 in step ST7.

Upon receiving the connection request from the gateway server 2, the information-terminal control apparatus 5 issues a booting instruction to the designated information terminal apparatus 4 (in step ST8).

The information terminal apparatus 4 is configured such that, it automatically issues a request for connection with the gateway server 2, when the information terminal apparatus 4 is booted. Thus, when the gateway server 2 and the information terminal apparatus 4 are connected to each other, it is highly likely that the information terminal apparatus 4 is not booted. The information-terminal control apparatus 5 may have a unit for checking whether or not the information terminal apparatus 4 is booted and issuing a notification indicating the result to the gateway server 2.

The booting instruction for the information terminal apparatus 4 is realized, for example, by creating a control message using Magic Packet™ based on Wake-on-Lan technology and sending the control message from the information-terminal control apparatus 5 to the information terminal apparatus 4 through the local network 10.

When the information terminal apparatus 4 is completely booted in response to the booting instruction issued from the information-terminal control apparatus 5, the information terminal apparatus 4 issues a connection request to the gateway server 2, so that the connection between the information terminal apparatus 4 and the gateway server 2 is established (in step ST9).

Further, in step ST10, the gateway server 2 performs authentication processing on the information terminal apparatus 4.

When the authentication succeeds, the gateway server 2 changes "disconnected" in the "connection status" field in the remote-access management table to "established" and registers the status (in step ST10a).

In step ST11, the gateway server 2 issues a notification, indicating that the connection between the gateway server 2 and the information terminal apparatus 4 is established, to the remote access terminal 3.

After the gateway server 2 receives the communication request, when the connection between the gateway server 2 and the information terminal apparatus 4 is not yet established after a predetermined amount of time elapses, the gateway server 2 also issues a notification indicating that the connection is not yet established.

This notification is typically issued using the connection established in steps ST 3 and ST4. In some cases, however, the connection may already be disconnected.

The information terminal apparatus 4, such as a personal computer, requires a predetermined amount of time to boot. On the other hand, for example, when the remote access terminal 3 is a mobile telephone, continuous long-term connection is inconvenient for the user in terms of the battery capacity and communication cost.

Accordingly, when the connection established in steps ST3 and 4 has been disconnected, the electronic-mail sending unit 28 included in the gateway server 2 can be used to issue a notification to the remote access terminal 3, such as a mobile telephone. The electronic-mail sending unit 28 included in the gateway server 2 allows the user to temporarily disconnect the connection after issuing the communication request and to receive, in the form of electronic mail, a completion notification for the connection between the information terminal apparatus 4 and the gateway server 2. This arrangement can improve the usability.

In step ST12, the gateway server 2 sends the communication request, received from the remote access terminal 3 in step ST6, to the information terminal apparatus 4.

In step ST12a, upon receiving the communication request, the information terminal apparatus 4 determines whether or not it can communication with the remote access terminal 3. When the communication is possible, the information terminal apparatus 4 sends a communication acceptance notification to the gateway server 2. When the communication is not possible, the information terminal apparatus 4 sends a communication rejection notification to the gateway server 2.

Upon receiving the communication acceptance notification, the gateway server 2 changes "established" in the "connection status" field in the remote-access management table to "connected" (in step ST12b). In the remote-access management table, "connected" indicates a status in which the remote access terminal 3 and the information terminal apparatus 4 are connected to each other and bidirectional communication therebetween is possible.

Further, in step ST13a, the gateway server 2 issues a communication acceptance notification to the remote access terminal 3. In this case, when the connection established in steps ST 3 and ST 4 has been disconnected, the electronic-mail sending unit 28 issues a notification to the remote access terminal 3, thereby ensuring the usability.

At this stage, bidirectional communication between the remote access terminal 3 and the information terminal apparatus 1 is possible, and a remote operation can be performed between the remote operating unit 34 of the remote access terminal 3 and the remote processing unit 46 of the information terminal apparatus 4 via the relaying unit 27 of the gateway server 2.

On the other hand, when the communication is not approved, "established" in the "connection status" field in the remote-access management table is maintained. This is because there is no need to break the connection between the gateway server 2 and the information terminal apparatus 4, unless the information terminal apparatus 4 is shut down (i.e., powered off).

As in step ST13a, the gateway server 2 sends a communication rejection notification to the remote-access management table.

### 4) Suspension/Termination Operation of Information Terminal Remote Operation System 1

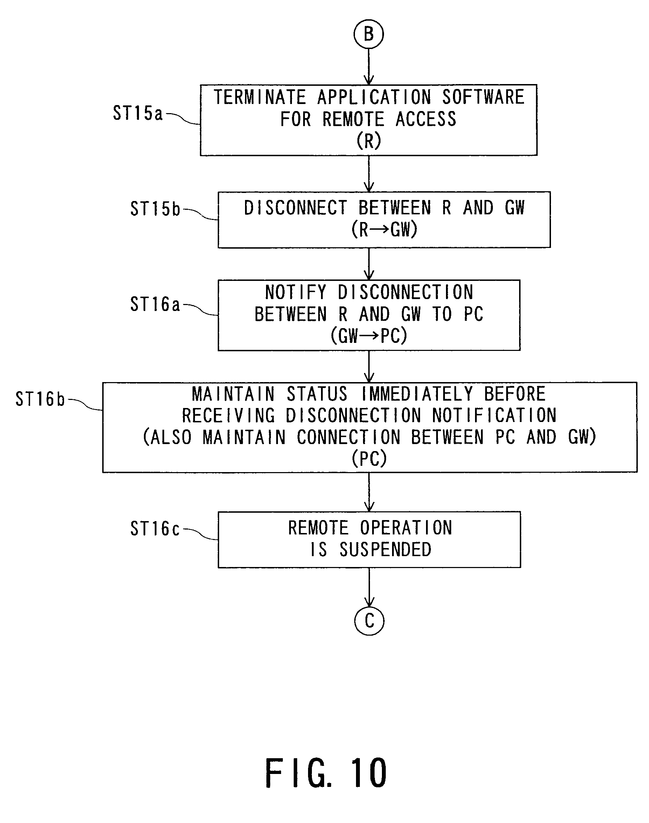

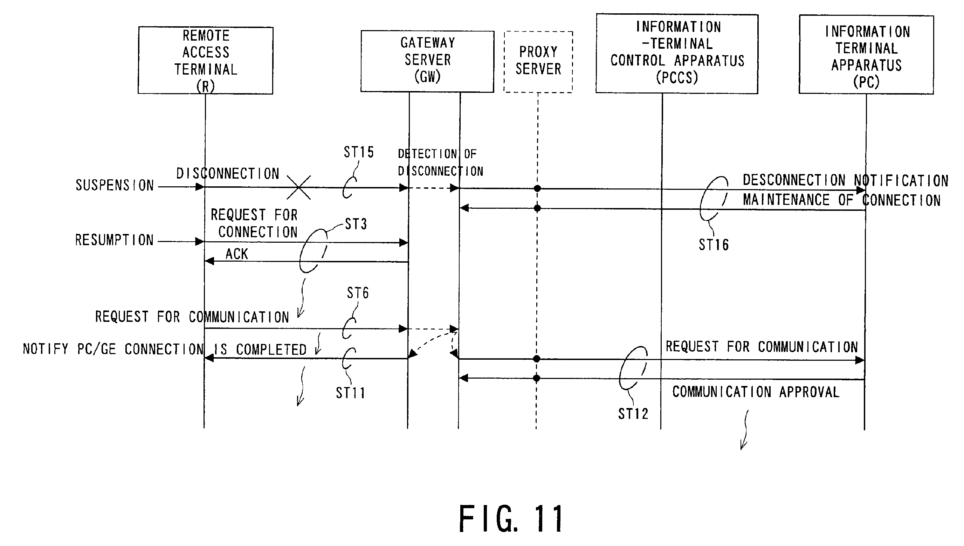

FIG. 10 is a flow chart illustrating a suspension operation of the information-terminal remote-operation system 1 and FIG. 11 is a sequence diagram therefor.

In FIGS. 10 and 11, the same process is denoted with the same step reference character.

In order for the remote access terminal 3 to temporarily terminate the remote operation of the information terminal apparatus 4, for example, the application software (the remote operating unit 34) of the remote access terminal 3 may be terminated (in step ST15a). As a result, the gateway-server connecting unit 32 of the remote access terminal 3 sends a disconnection notification to the gateway server 2, so that the connection between the remote access terminal 3 and the gateway server 2 is disconnected.

For example, when the remote access terminal 3 is wirelessly connected as in the case of a mobile telephone, the connection between the remote access terminal 3 and the gateway server 2 may be disconnected depending on a radio-wave environment or the like.

In step ST16a, the gateway server 2 issues a notification, indicating that the connection between the remote access terminal 3 and the gateway server 2 is disconnected, to the information terminal apparatus 4.

Upon receiving the disconnection notification, the information terminal apparatus 4 maintains the status immediately before receiving the disconnection notification. Also, the connection between the information terminal apparatus 4 and the gateway server 2 is maintained (in step ST16b) and the remote operation is put into a suspension state (in step ST16c).

In order to resume the remote operation from the suspension state, the process starts from the connection operation in step ST3 in the flow chart shown in FIG. 7.

In this case, however, since the connection between the information terminal apparatus 4 and the gateway server 2 is maintained, the processes from step ST7 to step ST10a are skipped, so that the communication between the remote access terminal 3 and the information terminal apparatus 4 can be resumed in a short period of time.

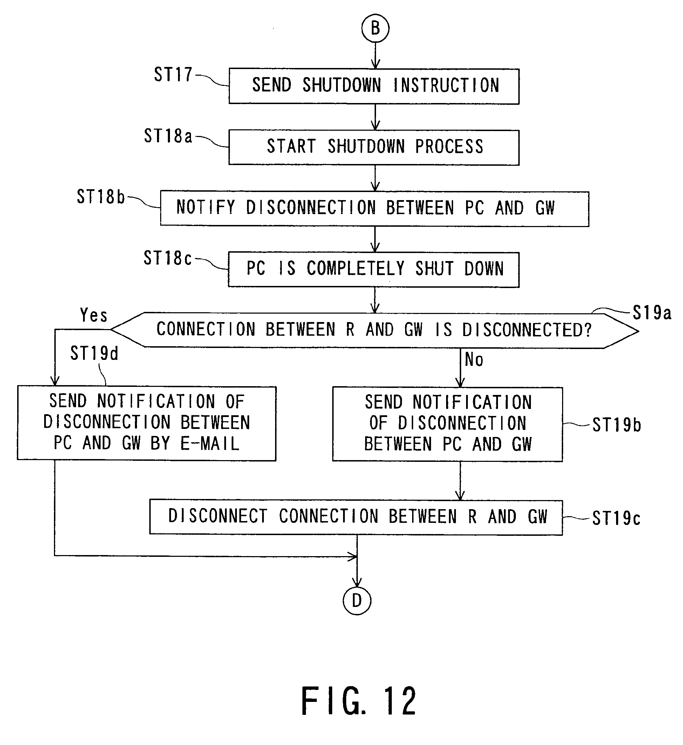

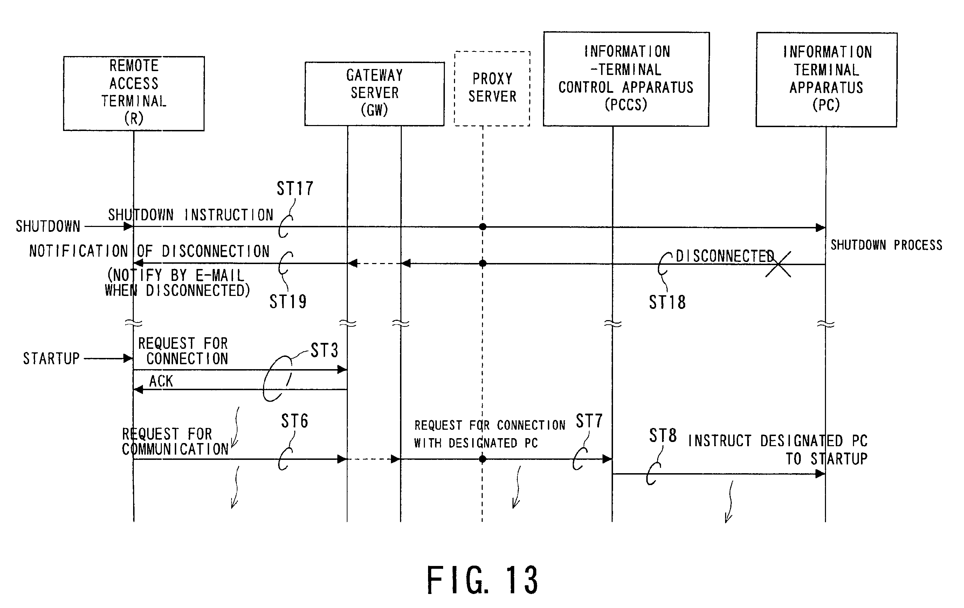

FIG. 12 is a flow chart illustrating a termination operation for a remote operation in the information-terminal remote-operation system 1 and FIG. 13 is a sequence diagram therefor.

In FIGS. 12 and 13, the same process is denoted with the same step reference numeral.

When terminating a remote operation, the remote access terminal 3 sends a shutdown instruction to the information terminal apparatus 4 (in step ST17).

Upon receiving the shutdown instruction, the information terminal apparatus 4 starts shutdown processing (in step ST18a).

Immediately before the shutdown processing finishes, the information terminal apparatus 4 issues, to the gateway server 2, a notification for disconnecting the connection between the information terminal apparatus 4 and the gateway server 2 (in step ST18b).

Thereafter, the information terminal apparatus 4 is completely shut down (powered off) (in step ST18c).

The gateway server 2 issues, to the remote access terminal 3, a notification indicating that the connection between the gateway server 2 and the information terminal apparatus 4 is disconnected. In this case, the gateway server 2 first checks whether or not the connection between the remote access terminal 3 and the gateway server 2 is disconnected (in step ST19a).

The shutdown of the information terminal apparatus 4 typically requires a predetermined amount of time. Thus, for example, when the remote access terminal 3 is a mobile telephone, the connection between the remote access terminal 3 and the gateway server 2 may be disconnected immediately after the shutdown instruction is issued. Thus, when the connection between the gateway server 2 and the remote access terminal 3 is disconnected, the electronic mail is used to issue a notification, indicating that the connection between the gateway server 2 and the information terminal apparatus 4 is disconnected, to the remote access terminal 3 (in step ST19d).

On the other hand, when the connection between the gateway server 2 and the remote access terminal 3 is not disconnected, the connection is used to issue a notification for disconnecting the connection between the gateway server 2 and the information terminal apparatus 4 to the remote access terminal 3 (in step ST19b). Thereafter, the connection between the gateway server 2 and the remote access terminal 3 is disconnected (in step ST19c).

After receiving the shutdown instruction and starting the shutdown processing, the information terminal apparatus 4 often does not stop properly. For example, when data storage according to a remote operation has been inadequately performed, the shutdown processing may not be completed unless an instruction for adequate storage is issued through a remote operation again.

In such a case, not only can the connection between the gateway server 2 and the remote access terminal 3 be used but also electronic mail can be used to ensure the notification. If the shutdown processing of the remote access terminal 3 should not be completed, the user can recognize the situation and can carry out an appropriate operation, such as reconnection.

### 5) Authentication Processing in Information Terminal Remote Operation System 1

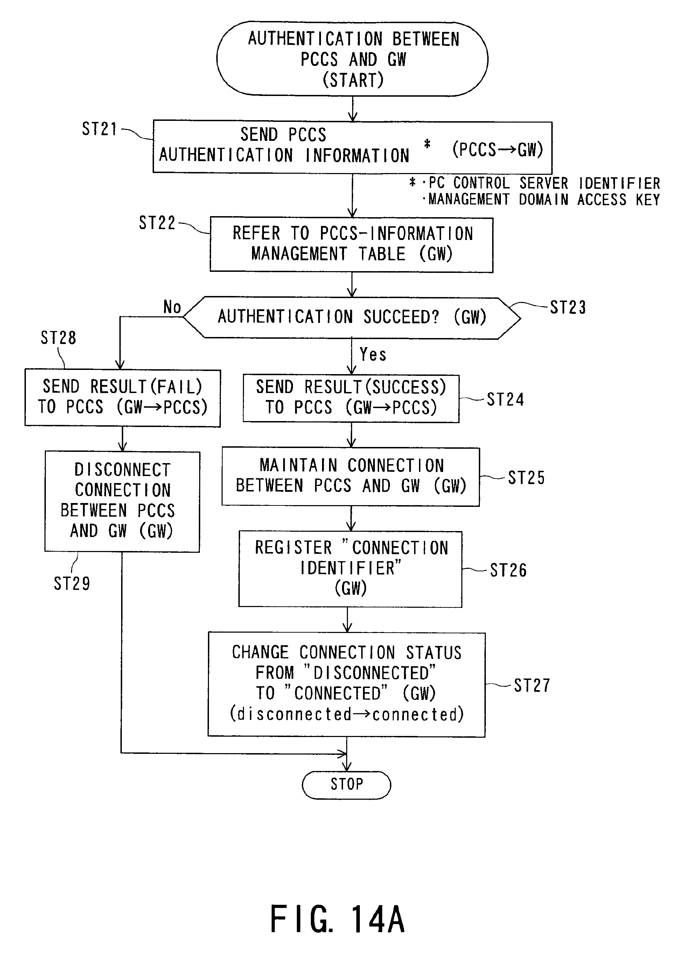

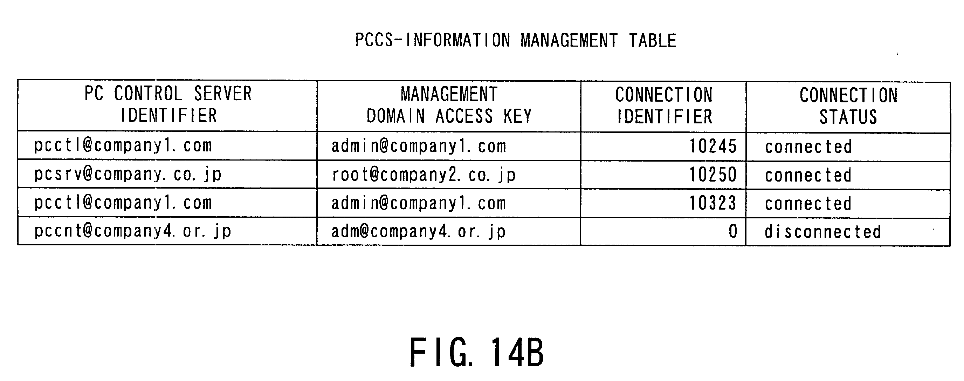

FIGS. 14A and 14B illustrate authentication processing for the information-terminal control apparatus 5. More specifically, FIG. 14A is a flow chart of authentication processing, and FIG. 14B shows an information management table (a PCCS-information management table), required for the authentication processing, for the information-terminal control apparatus 5.

First, the information-terminal control apparatus 5 sends its own authentication information to the gateway server 2 (in step ST21). The authentication information contains a "PC control server identifier" for identifying the corresponding information-terminal control apparatus 5 and a "management domain access key" corresponding to a password in the possession of the administrator of the information-terminal control apparatus 5.

Upon receiving the authentication information from the information-terminal control apparatus 5, the gateway server 2 refers to the PCCS-information management table pre-stored in the management-information storing unit 26 (in step ST22).

When the PCCS-information management table contains a "PC control server identifier" and a "management domain access key" received from the information-terminal control apparatus 5, it is determined that the authentication succeeds (in step ST23). Conversely, when the PCCS-information management table does not contain a "PC control server identifier" and a "management domain access key" received from the information-terminal control apparatus 5, it is determined that the authentication fails (in step ST23).

When the authentication succeeds, the gateway server 2 sends the result to the information-terminal control apparatus 5 (in step ST24). The gateway server 2 then maintains the connection between the gateway server 2 and the information-terminal control apparatus 5 (in step ST25).

A predetermined index(numeric) value is registered in the "connection identifier" field in the PCCS-information management table (in step ST26) and, further, the "connection status" field is changed from "disconnected" to "connected".

On the other hand, when the authentication fails, the gateway server 2 sends the result to the information-terminal control apparatus 5 (in step ST28). Thereafter, the gateway server 2 disconnects the connection between the gateway server 2 and the information-terminal control apparatus 5 (in step ST29).

Unless the authentication of the information-terminal control apparatus 5 succeeds, the processes subsequent to step ST3 shown in FIG. 3 cannot be performed.

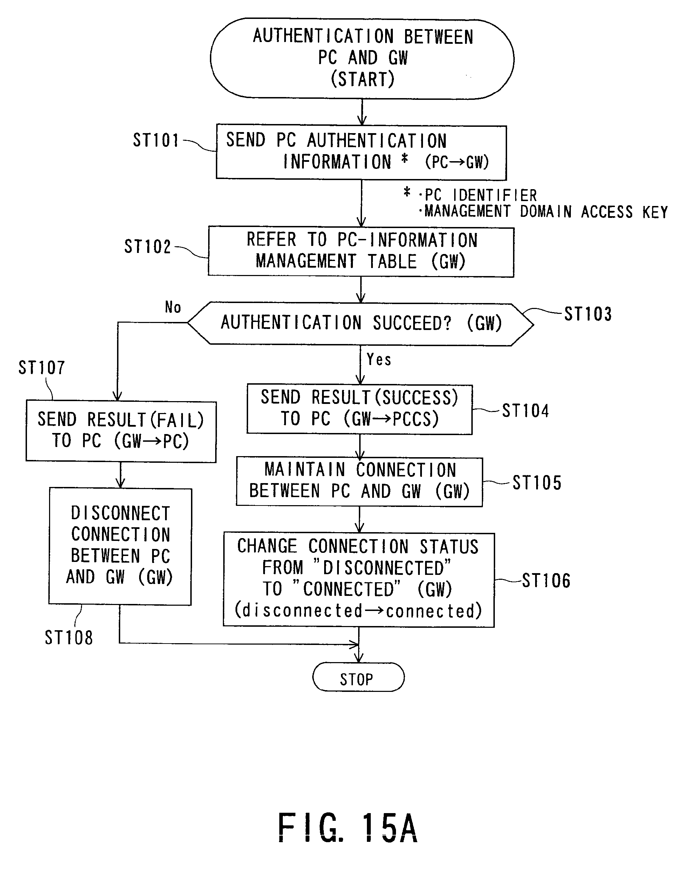

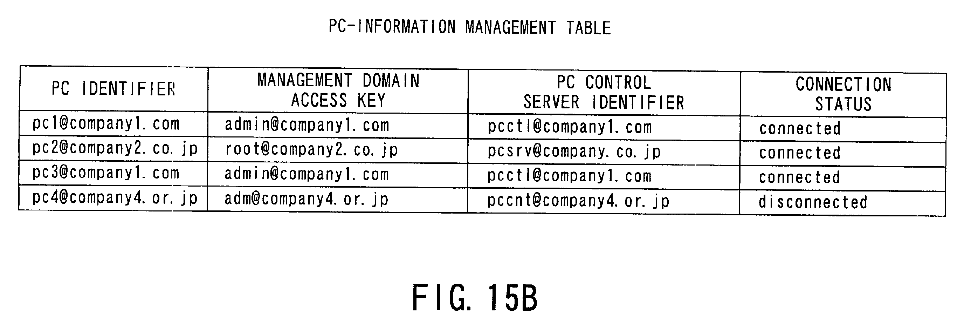

FIGS. 15A and 15B illustrate authentication processing for the information terminal apparatus 4. FIG. 15A is a flow chart of the authentication processing and FIG. 15B shows an information-terminal-apparatus information management table (a PC information management table) required for the authentication processing.

First, the information terminal apparatus 4 sends its own authentication information to the gateway server 2 (in step ST101). The authentication information contains a "PC identifier" for identifying the corresponding information terminal apparatus 4 and a "management domain access key" corresponding to a password in the possession of the administrator of the information terminal apparatus 4.

Upon receiving the authentication information from the information terminal apparatus 4, the gateway server 2 refers to the PC information management table pre-registered in the management-information storing unit 26 (in step ST102).

When the PC information management table contains a "PC identifier" and a "management domain access key" received from the information terminal apparatus 4, it is determined that the authentication succeeds (in step ST103). Conversely, when the PC information management table does not contain a "PC identifier" and a "management domain access key" received from the information terminal apparatus 4, it is determined that the authentication fails (in step ST103).

When the authentication succeeds, the gateway server 2 sends the result to the information terminal apparatus 4 (in step ST104). The gateway server 2 then maintains the connection between the gateway server 2 and the information terminal apparatus 4 (in step ST105).

The gateway server 2 also changes the "connection status" field from "disconnected" to "connected".

On the other hand, when the authentication fails, the gateway server 2 sends the result to the information terminal apparatus 4 (in step ST107). Thereafter, the gateway server 2 disconnects the connection between the gateway server 2 and the information terminal apparatus 4 (in step ST108).

Unless the authentication of the information terminal apparatus 4 succeeds, the processes subsequent to step ST10a shown in FIG. 7 cannot be performed.

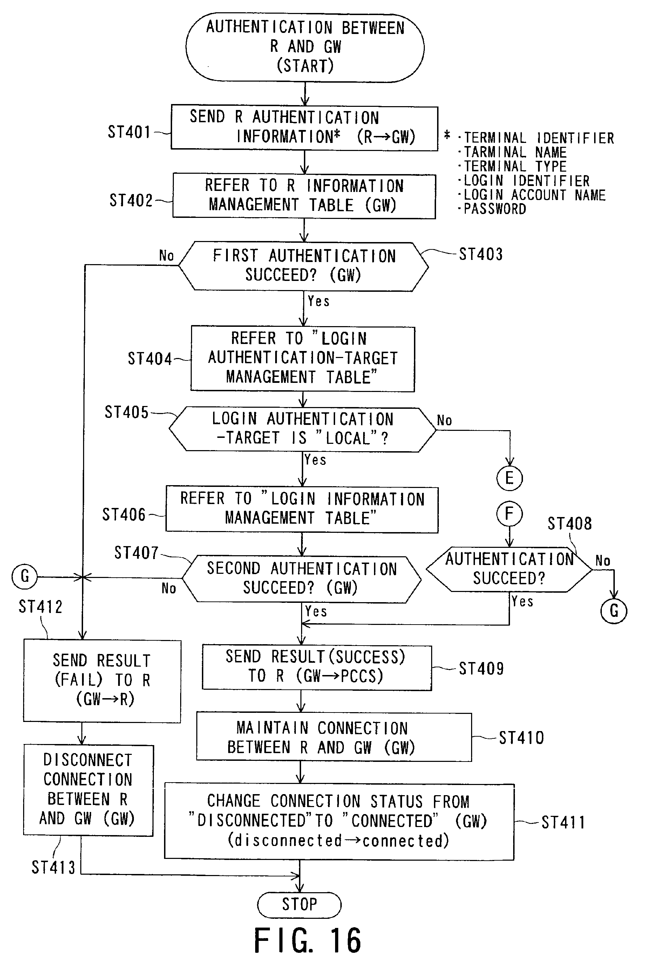

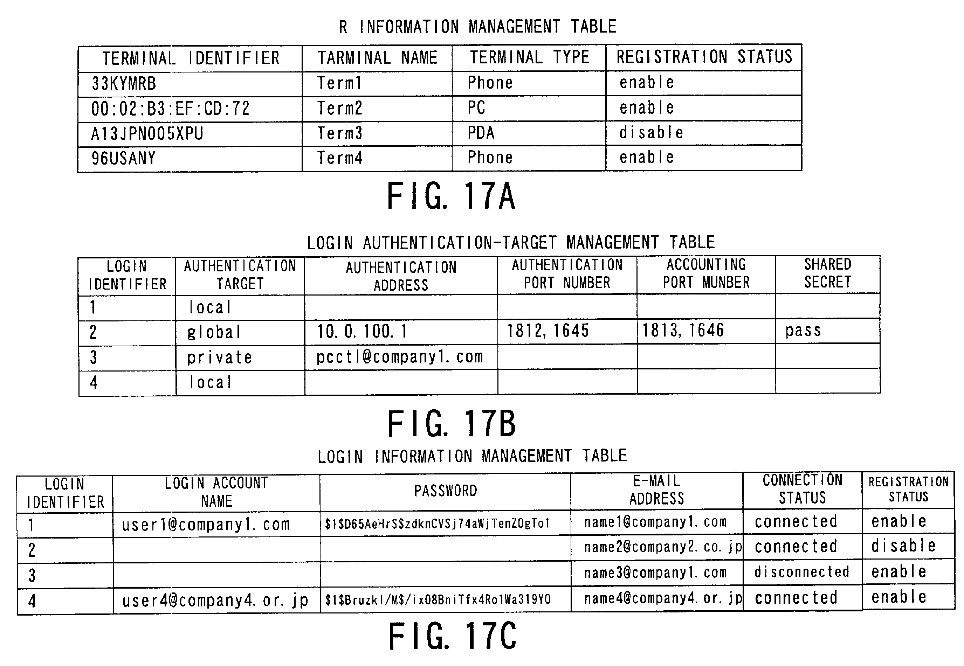

FIGS. 16, 17A, 17B, and 17C illustrate authentication processing for the remote access terminal 3. FIG. 16 is a flow chart of the authentication processing. FIG. 17A shows a remote-access-terminal-apparatus information management table (an R information management table) required for the authentication processing, FIG. 17B shows a login authentication-target management table, and FIG. 17C shows a login-information management table.

The authentication of the remote access terminal 3 is classified into apparatus authentication for authenticating the apparatus of the remote access terminal 3 and login authentication for authenticating the user of the remote access terminal 3.

The R information management table is used for the apparatus authentication and the login authentication-target management table and the login-information management table are used for the login authentication.

In step ST401, first, the remote access terminal 3 sends, to the gateway server 2, apparatus authentication information for identifying the apparatus of the remote access terminal 3 and login authentication information for identifying the user. The apparatus authentication information for identifying the apparatus contains a corresponding "terminal identifier", "terminal name", and "terminal type".

The login authentication information for identifying the user contains a "login identifier", "login account name", and "password".

Upon receiving the apparatus authentication information, the gateway server 2 refers to the R information management table pre-registered by the management-information storing unit 26 (in step ST402).

When the apparatus authentication information sent from the remote access terminal 3 matches the "terminal identifier", "terminal name", and "terminal type" in the R information management table and when a corresponding "registration status" field indicates "enable", it is determined that the apparatus authentication succeeds (in step ST403). Conversely, when the apparatus authentication information sent from the remote access terminal 3 does not match the "terminal identifier", "terminal name", and "terminal type" in the R information management table or a corresponding "registration status" field indicates "disable", it is determined that the apparatus authentication fails (in step ST403).

Processes in steps ST404 to ST408 are processes for the login authentication.

First, the gateway server 2 refers to the login authentication-target management table to determine the authentication information target of the remote access terminal 3 based on the received "login identifier" of the remote access terminal 3. There are three types of authentication target, i.e., "local", "private", and "global". The "local" indicates that the gateway server 2 itself performs authentication. The "private" indicates that the authentication apparatus 6, provided in the local network 10, performs authentication. The "global" indicates that the public authentication apparatus 9, provided in the public network 11, performs authentication.

As a result of referring to the login authentication-target management table, when a login authentication target corresponding to the received "login identifier" indicates "local" (Yes in step ST405), the gateway server 2 further refers to the login-information management table (in step ST406).

When the "login account name" and "password" received from the remote access terminal 3 match a "login account name" and "password" registered in the login-information management table and when a corresponding "registration status" field indicates "enable", it is determined that the login authentication succeeds (Yes in step ST407).

Conversely, when the "login account name" and "password" received from the remote access terminal 3 do not match a "login account name" and "password" registered in the login-information management table or when a corresponding "registration status" field indicates "disable", it is determined that the login authentication fails (No in step ST407).

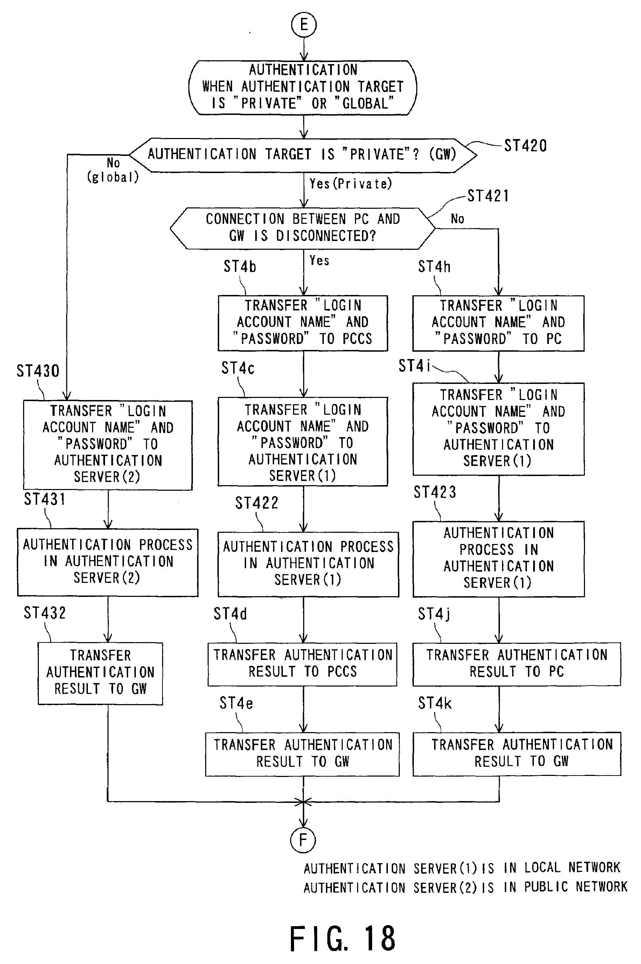

On the other hand, when the login authentication-target management table indicates that the authentication target of a received "login identifier" is "private" or "global", the flow branches to the process in the flow chart shown in FIG. 18.

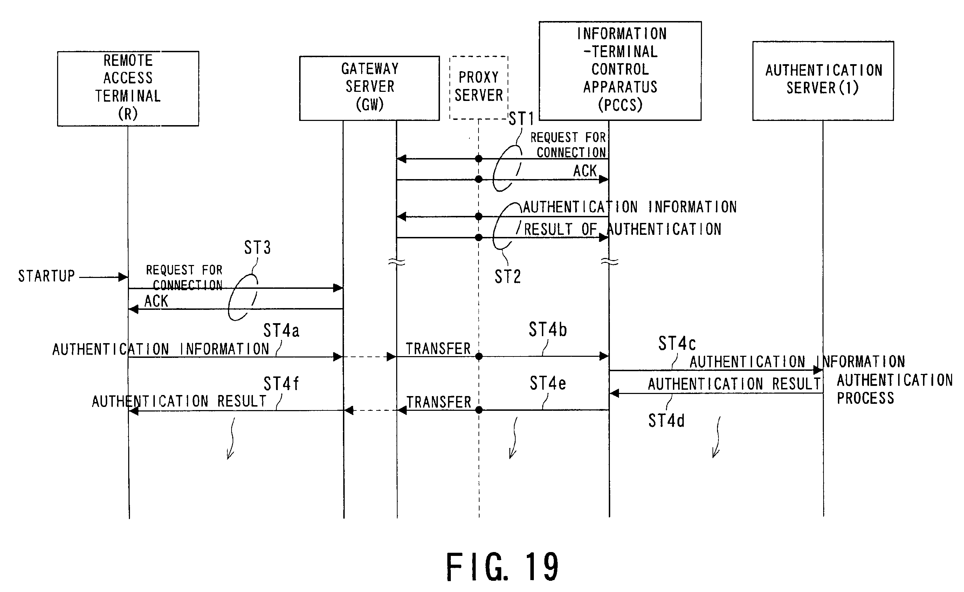

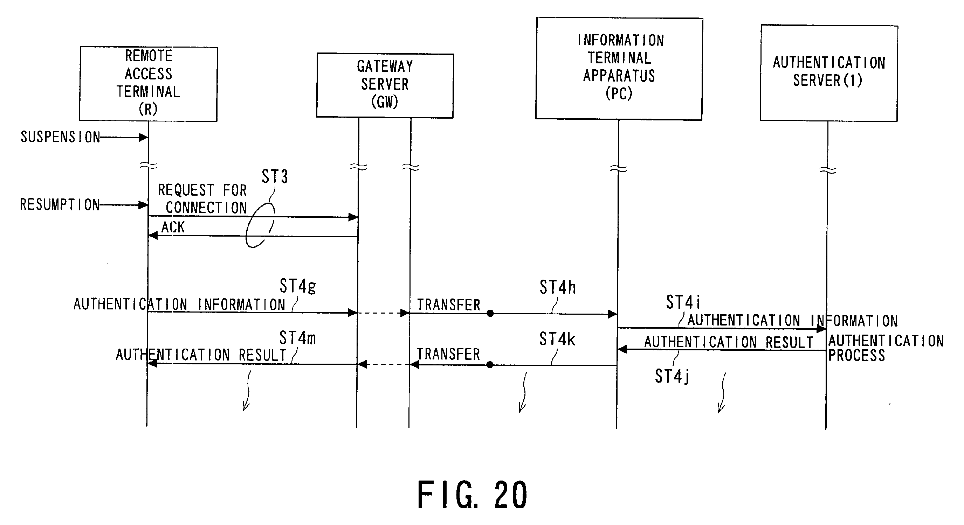

FIGS. 18 to 20 illustrate authentication processing when the authentication target is "private" or "global". FIG. 18 is a flow chart when the authentication target is "private" or "global". FIGS. 19 and 20 are sequence diagrams when the authentication target is "private". In FIGS. 18 to 20, the same process is denoted with the same step reference character and descriptions for redundant portions are not given.

In step ST420 shown in FIG. 18, the gateway server 2 determines whether an authentication target is "private" or "global". When the authentication target is "private", the gateway server 2 sends a request for authentication to the private authentication apparatus 6 in the local network 10 via either the information-terminal control apparatus 5 or the information terminal apparatus 4 in the local network 10.

The connection between the gateway server 2 and the information terminal apparatus 4 is checked (in step ST421). When the connection is disconnected, authentication is performed via the information-terminal control apparatus 5. Thus, of the login authentication information, the "login account name" and "password" are transferred to the information-terminal control apparatus 5 (in step ST4b).

The information-terminal control apparatus 5 further transfers the transferred "login account name" and "password" to the private authentication apparatus 6 (in step ST4c). The private authentication apparatus 6 compares the transferred "login account name" and "password" with the pre-registered "login account name" and "password". When they match each other, the private authentication apparatus 6 determines that the authentication succeeds. When they do not match, the private authentication apparatus 6 determines that the authentication fails (in step ST422).

Next, in steps ST4d and ST4e, the private authentication apparatus 6 transfers the authentication result to the gateway server 2 along the reverse channel.

When the connection between the gateway server 2 and the information terminal apparatus 4 is not disconnected in step ST421, the gateway server 2 transfers the "login account name" and "password" to the private authentication apparatus 6 via the information terminal apparatus 4. Although processes in steps ST4h to ST4k are different, in a transfer destination, from the processes in steps ST4b to ST4e, other processes are the same and thus the description thereof will not be given below.

On the other hand, when the gateway server 2 determines that the authentication target is "global" (No in step ST420), the gateway server 2 transfers the "login account name" and "password" to the public authentication apparatus 9 in the public network 11 (in step ST430). After performing authentication (in step ST431), the public authentication apparatus 9 transfers the authentication result to the gateway server 2 (in step ST432).

When the apparatus authentication and the login authentication succeed, the gateway server 2 issues a notification indicating the authentication result (success) to the remote access terminal 3 (in step ST409 shown in FIG. 16) and maintains the connection between the gateway server 2 and the remote access terminal 3 (in step ST410). The gateway server 2 then changes the "connection status" field in the login-information management table from "disconnected" to "connected" (in step ST411).

On the other hand, when at least one of the apparatus authentication and the login authentication fails, the gateway server 2 issues a notification indicating the authentication result (failure) to the remote access terminal 3 (in step ST412) and then disconnects the connection between the remote access terminal 3 and the gateway server 2 (in step ST413).

When sufficient security can be ensured with only the login authenticating unit, the apparatus authentication may be omitted. Such an arrangement simplifies the operation for the user authentication of the remote access terminal 3.

According to the information-terminal remote-operation system 1 of the first embodiment and the individual elements constituting the information-terminal remote-operation system 1, the remote access terminal 3, such as a mobile telephone connectable to the public network 11, can remotely operate the information terminal apparatus 4 provided in the local network 10, such as a corporate intranet. In this case, even when the information terminal apparatus 4 is not booted, the remote access terminal 3 issues a booting instruction to boot the information terminal apparatus 4, thereby making it possible to remotely operate the information terminal apparatus 4.

Since all communications between the elements included in the information-terminal remote-operation system 1 are encrypted, high confidentiality is achieved.

In addition, in order to establish connection between individual elements in the information-terminal remote-operation system 1, authentication is performed by performing comparison with the pre-registered authentication information. This arrangement can prevent connection of an unauthorized third-person, thereby ensuring sufficient security.

Further, in this configuration, electronic mail can also be used to send, to the remote access terminal 3, the connection completion notification of the information terminal apparatus 4, the communication acceptance/rejection determination result for a communication request from the remote access terminal 3, a shutdown state for a shutdown instruction, and so on. Thus, the communication reliability of the remote access terminal 3, such as a mobile telephone, can be improved.

In addition, since notification using electronic mail is ensured, the user of a mobile telephone or the like does not have to maintain a connection for a long time to wait for the notification, even for processing that requires a certain amount of time, for example, for start or shut-down processing for the information terminal apparatus 4. Consequently, the usability is enhanced.

### 6) Other Embodiments of Information Terminal Remote Operation System

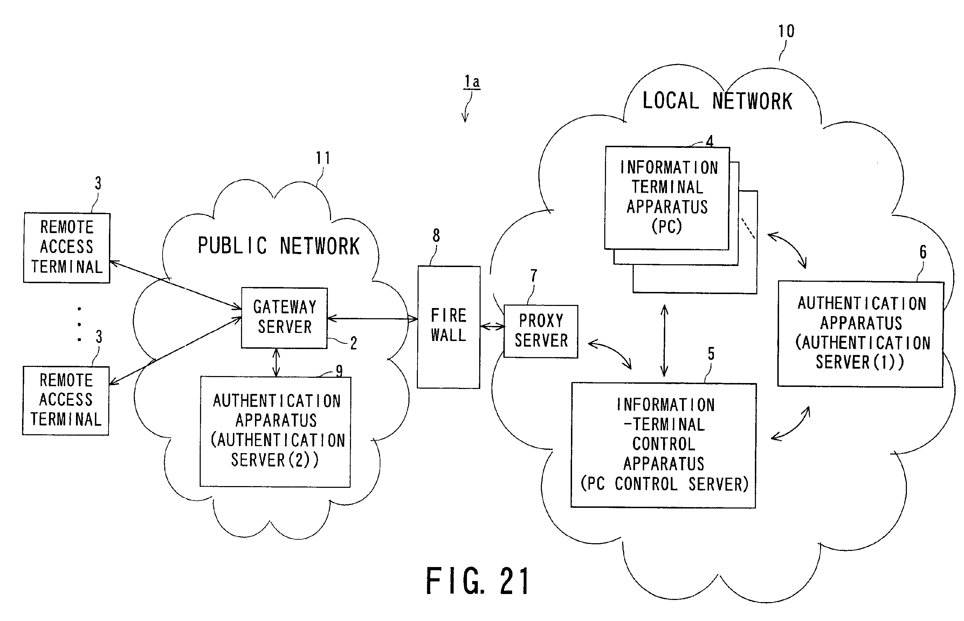

FIG. 21 shows the system configuration of an information-terminal remote-operation system 1a according to a second embodiment of the present invention.

The information-terminal remote-operation system 1 of the second embodiment has a configuration in which the connection from the information terminal apparatus 4 to the gateway server 2 is eliminated such that all communications between the information terminal apparatus 4 and the gateway server 2 are performed via the information-terminal control apparatus 5. Other configurations are analogous to those in the first embodiment.

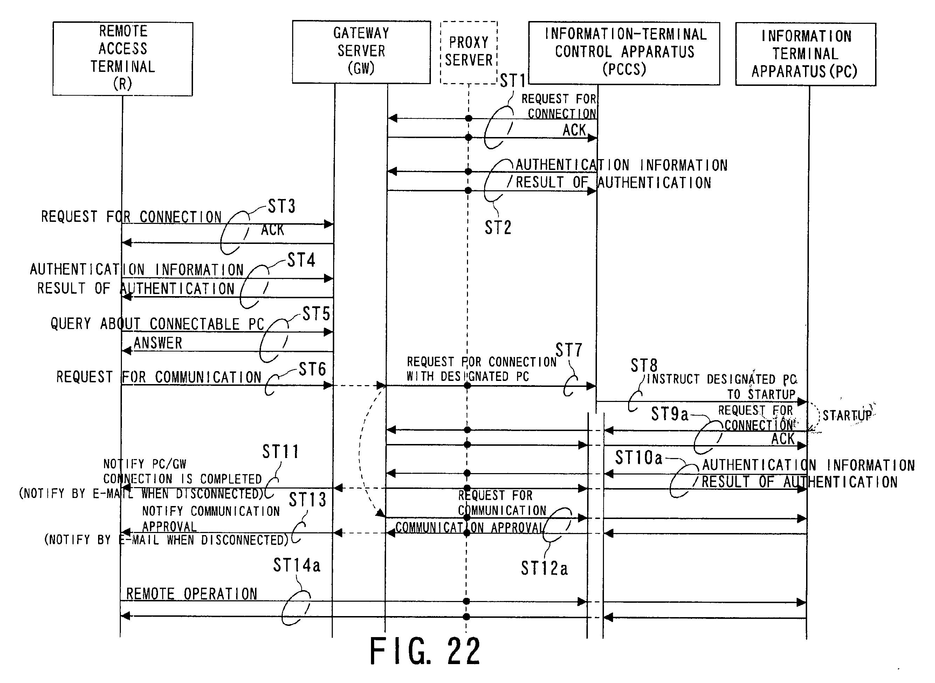

FIG. 22 is a sequence diagram of the information-terminal remote-operation system 1a of the second embodiment.

What is different from the sequence shown in FIG. 8 (the sequence diagram of the information-terminal remote-operation system 1 of the first embodiment) is that all the communications with the information terminal apparatus 4 after step ST9 is performed via the information-terminal control apparatus 5. Other points are analogous to those in the first embodiment.

In some cases, for the security reason, the local network 10 may prohibit the connection between the information terminal apparatus 4, such as a personal computer, and the public network 11. In such a local network 10, the information-terminal remote-operation system 1a of the second embodiment is effective.

According to the second embodiment, since the information terminal apparatus 4 cannot directly communicate with the external public network 11, the communication between the information terminal apparatus 4 and the information-terminal control apparatus 5 does not necessarily have to be encrypted. Thus, the connection processing can be simplified.

The present invention is not merely limited to the specific embodiments described above, and changes and modifications are also possible to the elements disclosed in the embodiments without departing from the spirit and scope of the present invention. Some of the elements in the embodiments may be appropriately combined to achieve various modifications. For example, some of the elements shown in the embodiments may be eliminated. In addition, some of the elements used in the different embodiments may be appropriately combined.

## Claims

1. An information-terminal remote-operation system, comprising:
at least one remote access terminal connected to a public network;
a local network connected to the public network via a firewall;
at least one information terminal apparatus that is connected to the local network and that is remotely operated by the remote access terminal;
an information-terminal control apparatus that is connected to the local network to control the information terminal apparatus; and
a gateway server provided in the public network to control bidirectional communication between the remote access terminal and the information terminal apparatus and bidirectional communication between the remote access terminal and the information-terminal control apparatus;
wherein, when the remote access terminal attempts to remotely operate the information terminal apparatus and the information terminal apparatus is not booted, the information-terminal control apparatus boots the information terminal apparatus.

2. A gateway server that is provided in a public network to control bidirectional communication between at least one remote access terminal and at least one information terminal apparatus and bidirectional communication between the remote access terminal and an information-terminal control apparatus, the remote access terminal being connected to the public network and the information terminal apparatus and the information-terminal control apparatus being provided in a local network connected to the public network via a firewall, the gateway server comprising:
a ciphering unit configured to encrypt and to decrypt the bidirectional communication;
a first connecting unit configured to perform communication with the information-terminal control apparatus;
a second connecting unit configured to perform communication with the remote access terminal;
a third connecting unit configured to perform communication with the information terminal apparatus;
an authenticating unit configured to authenticate connections with the remote access terminal, the information terminal apparatus, and the information-terminal control apparatus;
a management-information storing unit configured to pre-store authentication information required for the authentication and storing states of the connections in relation to the authentication information;
an electronic-mail sending unit configured to send electronic mail to the remote access terminal; and
a relaying unit configured to relay the bidirectional communication between the remote access terminal and the information terminal apparatus;
wherein, when the remote access terminal attempts to remotely operate the information terminal apparatus and the information terminal apparatus is not booted, the first connecting unit issues an instruction to the information-terminal control apparatus so as to boot the information terminal apparatus.

3. The gateway server according to claim 2, wherein the ciphering unit comprises encryption and decryption functionality based on an SSL/TLS protocol.

4. The gateway server according to either of claims 2 or 3, wherein, upon receiving connection establishment requests from the remote access terminal, the information terminal apparatus, and the information-terminal control apparatus, the first, second, and third connecting units establish secure connections based on the ciphering unit.

5. The gateway server according to any of claims 2 to 4, wherein the authenticating unit comprises a first authenticating unit and a second authenticating unit:
the first authenticating unit comprising: a first determining unit configured to determine authentication in accordance with apparatus authentication information received from the information terminal apparatus and the information-terminal control apparatus and in accordance with the authentication information stored by the management-information storing unit;
a first authenticating acceptance unit configured, when the first determining unit determines that the authentication succeeds, to maintain established connections with the information terminal apparatus and the information-terminal control apparatus, to issue a notification indicating a result of the determination to the remote access terminal and, to update the states of the connections with the information terminal apparatus and the information-terminal control apparatus, the states being stored by the management-information storing unit; and
a first authenticating rejection unit configured, when the first determining unit determines that the authentication fails, to disconnect connections with the information terminal apparatus and the information-terminal control apparatus, to issue a notification indicating a result of the determination to the remote access terminal, and to update the states of the connections with the information terminal apparatus and the information-terminal control apparatus, the states being stored by the management-information storing unit; and
the second authenticating unit comprising: a second determining unit configured to determine authentication in accordance with login authentication information received from the remote access terminal or login authentication information and apparatus authentication information received from the remote access terminal and in accordance with the authentication information stored by the management-information storing unit;
a second authenticating acceptance unit configured, when the second determining unit determines that the authentication succeeds, to maintain an established connection with the remote access apparatus, to issue a notification indicating a result of the determination to the remote access terminal, and to update the state of the connection with the remote access terminal, the state being stored by the management-information storing unit; and
a second authenticating rejection unit configured, when the second determining unit determines that the authentication fails, to issue a notification indicating a result of the determination to the remote access terminal, to disconnect a connection with the remote access terminal, and to update the state of the connection with the remote access terminal, the state being stored by the management-information storing unit.

6. The gateway server according to claim 5, wherein the second authenticating unit comprises a transferring unit configured, when a authentication target of login authentication information received from the remote access terminal is the authentication apparatus in the local network, to transfer the login authentication information to an authentication apparatus in the local network via the information-terminal control apparatus and to receive a result of authentication performed by the authentication apparatus; and the second determining unit performs determination that includes the result of the authentication performed by the authentication apparatus.

7. The gateway server according to claim 5, wherein the second authenticating unit comprises a transferring unit configured, when a authentication target of login authentication information received from the remote access terminal is an authentication apparatus in the local network, to transfer the login authentication information to the authentication apparatus in the local network via the information terminal apparatus and to receive a result of authentication performed by the authentication apparatus; and the second determining unit performs determination that includes the result of the authentication performed by the authentication apparatus.

8. The gateway server according to any of claims 2 to 7, wherein the second connecting unit further comprises a referring unit configured, upon receiving a query for an information terminal apparatus to be remotely operated from the remote access terminal, to refer to the management-information storing unit and to return apparatus identification information of the information terminal apparatus to be remotely operated to the remote access terminal.

9. The gateway server according to any of claims 2 to 8, wherein, upon receiving a request for communication with the information terminal apparatus from the remote access terminal, the second connecting unit refers to the management-information storing unit to determine whether or not a connection between the information terminal apparatus and the gateway sever is established, wherein when the connection between the information terminal apparatus and the gateway server is established, the second connecting unit issues a notification indicating the established connection to the remote access terminal; and when the connection between the information terminal apparatus and the gateway server is not established, the first connecting unit issues an instruction to the information-terminal control apparatus, stored in the management-information storing unit in relation to the information terminal apparatus, so as to send a booting instruction to the information terminal apparatus.

10. The gateway server according to any of claims 2 to 9, wherein after receiving a request for communication with the information terminal from the remote access terminal, when a connection between the information terminal apparatus and the gateway server is established within a predetermined amount of time, the second connecting unit issues an notification indicating a state of the connection to the remote access terminal, and when a connection between the information terminal apparatus and the gateway server is not established after a predetermined amount time elapses, the second connecting unit issues a notification indicating a state of the connection to the remote access terminal.

11. The gateway server according to claim 10, wherein, when a connection between the remote access terminal and the gateway server is established, the connection is used to issue the notification to the remote access terminal, and when a connection between the remote access terminal and the gateway server is not established, the electronic-mail sending unit is used to issue the notification.

12. The gateway server according to any of claims 2 to 11, wherein after a connection between the remote access terminal and the gateway server and a connection between the information terminal apparatus and the gateway server are established, the third connecting unit issues, to the information terminal apparatus, a request for communication from the remote access terminal to the information terminal apparatus; when the information terminal apparatus accepts the communication request, the third connecting unit issues a notification indicating the acceptance to the remote access terminal via the second connecting unit; and when the information terminal apparatus rejects the communication request, the third connecting unit issues a notification indicating the rejection to the remote access terminal via the second connecting unit and maintains the established connection between the information terminal apparatus and the gateway server.

13. The gateway server according to any of claims 2 to 12, wherein the relaying unit relays bidirectional communication between the remote access terminal and the information terminal apparatus, after a connection between the remote access terminal and the gateway server and a connection between the information terminal apparatus and the gateway server are established, the information terminal apparatus accepts a request for communication from the remote access terminal to the information terminal apparatus, and a notification indicating the acceptance is issued to the remote access terminal.

14. The gateway server according to any of claims 2 to 13, wherein, when a connection between the remote access terminal and the gateway server is disconnected, the third connecting unit issues a notification indicating the disconnection to the information terminal apparatus that has performed bidirectional communication with the remote access terminal, and temporarily stops the bidirectional communication.

15. The gateway server according to any of claims 2 to 14, wherein, when the remote access terminal issues a shutdown instruction to the information terminal apparatus, the second connecting unit issues a notification indicating a state of the disconnected connection between the information terminal apparatus and the gateway server to the remote access terminal.

16. The gateway server according to claim 15, wherein, when a connection between the remote access terminal and the gateway server is established, the connection is used to issue the notification to the remote access terminal, and when a connection between the remote access terminal and the gateway server is disconnected, the electronic-mail sending unit is used to issue the notification.

17. The gateway server according to any of claims 2 to 16, wherein the third connecting unit performs communication between the information terminal apparatus and the gateway server via the information-terminal control apparatus and the relaying unit performs communication between the information terminal apparatus and the remote access terminal via the information-terminal control apparatus.

18. A remote access terminal that is provided in a public network and that performs bidirectional communication with at least one information terminal apparatuses and an information-terminal control apparatus, provided in a local network connected to the public network via a firewall, via a gateway server, the remote access terminal comprising:
a ciphering unit configured to encrypt and to decrypt the bidirectional communication;
a connecting unit configured to perform communication with the gateway server;
an authentication-information sending unit configured to send authentication information to the gateway server;
a remote operating unit configured to remotely operate the information terminal apparatuses; and
an electronic-mail receiving unit configured to receive electronic mail from the gateway server;
wherein the information terminal apparatuses to be remotely operated comprise an information terminal apparatus to be booted by the information-terminal control apparatus.

19. The remote access terminal according to claim 18, wherein the authentication information contains login authentication information for uniquely identifying a user or the login authentication information and apparatus authentication information.

20. The remote access terminal according to either of claims 18 or 19, wherein the remote operating unit comprises a issuing unit configured to issue a request to the gateway server so as to return apparatus identification information of an information terminal apparatus to be remotely operated to the remote access terminal.

21. The remote access terminal according to any of claims 18 to 20, wherein the remote operating unit issues a communication request to the information terminal apparatus, and receives a notification regarding a state of a connection between the information terminal apparatus to which the communication request is issued and the gateway server and a notification regarding a result of communication acceptance/rejection determination performed by the information terminal apparatus.

22. The remote access terminal according to claim 21, wherein, when a connection between the remote access terminal and the gateway server is established, the connection is used to receive the notification regarding the state of the connection and the notification regarding the result of the communication acceptance/rejection determination, and when a connection between the remote access terminal and the gateway server is disconnected, the electronic-mail receiving unit is used to receive the notifications.

23. The remote access terminal according to any of claims 18 to 22, wherein the connecting unit disconnects the connection with the gateway server in accordance with an operation performed by a user of the remote access terminal.

24. The remote access terminal according to any of claims 18 to 23, wherein the remote operating unit sends an instruction for shutting down and powering off the information terminal apparatus to the information terminal apparatus.

25. An information terminal apparatus in a local network connected to a public network via a firewall, the information terminal apparatus comprising:
a connecting unit configured to perform bidirectional communication with a gateway server connected to the public network;
a ciphering unit configured to encrypt and to decrypt the bidirectional communication;
an authentication-information sending unit configured to send authentication information to the gateway server;
a remote operating unit configured to perform bidirectional communication with s remote access terminal connected to the gateway server through the public network and for being remotely operated by the remote access terminal;
a communication-request acceptance/rejection determining/returning unit configured, upon receiving a request for communication with the remote access terminal from the gateway server, to determine whether or not to approve the communication request, and to return a result of the determination to the gateway server;
a local connecting unit configured to receive a booting instruction sent from an information-terminal control apparatus to the information terminal apparatus when the remote access terminal attempts to remotely operate the information terminal apparatus and the information terminal apparatus is not booted; and
a booting unit configured to boot the information terminal apparatus after receiving the booting instruction;
wherein the connecting unit establishes a connection with the gateway server after the information terminal apparatus is booted.

26. The information terminal apparatus according to claim 25, wherein, upon receiving authentication information for authenticating a connection between the remote access terminal and the gateway server from the gateway server, the information terminal apparatus issues a request for authentication to an authentication apparatus connected to the local network and returns a result of the authentication to the gateway server.

27. The information terminal apparatus according to either of claims 25 or 26, wherein the ciphering unit comprises encryption and decryption functionality based on an SSL/TLS protocol.

28. The information terminal apparatus according to any of claims 25 to 27, wherein bidirectional communication with the gateway server is performed via a proxy server comprising an HTTP proxy server and a SOCKS proxy server.

29. The information terminal apparatus according to any of claims 25 to 28, wherein all bidirectional communications with the gateway server are performed via the information-terminal control apparatus connected to the local network.

30. An information-terminal control apparatus in a local network connected to a public network via a firewall, the information-terminal control apparatus comprising:
a local connecting unit capable of communicating with a plurality of information terminal apparatuses connected to the local network;
a gateway-server connecting unit configured to establish secure bidirectional connection with the gateway server connected to the public network;
a ciphering unit configured to encrypt and to decrypt the bidirectional communication;
an authentication-information sending unit configured to send authentication information to the gateway server;
a receiving unit configured to receive, from the gateway server via the established bidirectional communication, an identifier for identifying one of the information terminal apparatuses and a remote connection request sent from a remote access terminal connected to the public network;
a booting-instruction generating/sending unit configured to generate a booting instruction for booting the information terminal apparatus in accordance with the received remote connection request; and
a sending unit configured to send the generated booting instruction to the information terminal apparatus corresponding to the identifier via the local connection unit.

31. The information-terminal control apparatus according to claim 30, wherein, upon receiving authentication information for authenticating a connection between the remote access terminal and the gateway server from the gateway server, the information-terminal control apparatus issues a request for authentication to an authentication apparatus connected to the local network and returns a result of the authentication to the gateway server.

32. The information-terminal control apparatus according to either of claims 30 or 31, wherein the ciphering unit comprises encryption and decryption functionality based on an SSL/TLS protocol.

33. The information-terminal control apparatus according to any of claims 30 to 32, wherein the bidirectional communication with the gateway server is performed via a proxy server comprising an HTTP proxy server and a SOCKS proxy server.

34. The information-terminal control apparatus according to any of claims 30 to 33, wherein the booting instruction is based on Magic Packet™.

35. A remote operation method for an information-terminal remote-operation system including at least one remote access terminal connected to a public network, a local network connected to the public network via a firewall, at least one information terminal apparatus connected to the local network, an information-terminal control apparatus that is connected to the local network and that controls the information terminal apparatus, and a gateway server that controls encrypted bidirectional communication between the remote access terminal and the information terminal apparatus and encrypted bidirectional communication between the remote access terminal and the information-terminal control apparatus, the method comprising the steps of:
establishing a first connection between the information-terminal control apparatus and the gateway server;
sending information, required for first authentication, from the information-terminal control apparatus to the gateway server;
maintaining the first connection when the gateway server succeeds in the first authentication and disconnecting the first connection when the gateway server fails in the first authentication;
establishing a second connection between the remote access terminal and the gateway server;
sending information, required for second authentication, from the remote access terminal to the gateway server;
maintaining the second connection when the gateway server succeeds in the second authentication and disconnecting the second connection when the gateway server fails in the second authentication;
sending a request, from the remote access terminal to the gateway server, for communication with a specific one of the at least one information terminal apparatus connected to the local network; and
issuing an instruction from the gateway server to the information-terminal control apparatus so as to boot the specific information terminal apparatus, when the specific information terminal apparatus is not booted;
wherein, upon receiving the instruction, the information-terminal control apparatus boots the specific information terminal apparatus and establishes a third connection between the specific information terminal apparatus and the gateway server; the specific information terminal apparatus sends information required for third authentication to the gateway server; when the gateway server succeeds in the third authentication, the third connection is maintained, and when the gateway server fails in the third authentication, the third connection is disconnected; the gateway server issues the communication request, received from the remote access terminal, to the information terminal apparatus via the third connection; the information terminal apparatus determines whether or not to approve the communication request, issues a notification indicating a result of the determination to the gateway server, and maintains the third connection regardless of the determination result; when the second connection is maintained, the gateway server uses the second connection to issue a notification indicating a state of the third connection and a notification indicating the determination result to the remote access terminal, and when the second connection is disconnected, the gateway server uses electronic mail to issue the notifications to the remote access terminal; and the remote access terminal remotely operates the information terminal apparatus through bidirectional communication with the information terminal apparatus, the bidirectional communication using the second connection and the third connection.
